# EUROPÄISCHE PATENTSCHRIFT

(11) **EP 3 791 370 B1**
(45) Veröffentlichungstag und Bekanntmachung des Hinweises auf die Patenterteilung: **26.07.2023**
(21) Anmeldenummer: 19723362.0
(22) Anmeldetag: 07.05.2019
(51) Int. Cl.: G08B 13/16, G08B 29/18

(54) **VORRICHTUNG, VERFAHREN UND COMPUTERPROGRAMM ZUR AKUSTISCHEN ÜBERWACHUNG EINES ÜBERWACHUNGSBEREICHS**
APPARATUS, METHOD, AND COMPUTER PROGRAM FOR ACOUSTICALLY MONITORING A MONITORING REGION
DISPOSITIF, PROCÉDÉ ET PROGRAMME D'ORDINATEUR POUR LA SURVEILLANCE ACOUSTIQUE D'UNE ZONE DE SURVEILLANCE

(30) Priorität: 07.05.2018 DE 102018207084; 13.07.2018 DE 102018211758
(43) Veröffentlichungstag der Anmeldung: 17.03.2021
(73) Patentinhaber: Fraunhofer-Gesellschaft zur Förderung der angewandten Forschung e.V., 80686 München (DE)
(72) Erfinder: ABESSER, Jakob, 98693 Ilmenau (DE); LUKASHEVICH, Hanna, 98693 Ilmenau (DE); HOLLY, Steffen, 98693 Ilmenau (DE); KÖRBER, Yvette, 8045 Zürich (CH); RUCH, Reto, 8045 Zürich (CH)
(74) Vertreter: Zinkler, Franz
(86) Internationale Anmeldenummer: PCT/EP2019/061699
(87) Internationale Veröffentlichungsnummer: WO 2019/215166

(56) Entgegenhaltungen:
- EP-A2- 2 988 105
- DE-A1-102012 211 154
- US-A- 5 703 835

## Beschreibung

### Technisches Gebiet

Ausführungsbeispiele gemäß der Erfindung beziehen sich auf eine Vorrichtung, ein Verfahren und ein Computerprogramm zur akustischen Überwachung eines Überwachungsbereichs.

### Hintergrund der Erfindung

Überwachungsbereiche werden bisher auf unterschiedlichste Weise überwacht. So kann beispielsweise per Video/Infrarot-Kamera (z. B. http://www.1000eyes.de/videoueberwachung/baustellen-webcam) eine Baustellendokumentation durchgeführt werden oder auch andere Überwachungsbereiche überwacht werden. Die Motivation für Video/Infrarot-Kamerasysteme liegt in der Regel im Schutz vor Diebstahl, Vandalismus und Sabotage. Mithilfe der Video/Infrarot-Kameras kann unter Umständen eine manuelle Auswertung des Baufortschrittes möglich sein, oder auch eine Überwachung eines Verkehrsaufkommens auf einem Straßennetz. Hierfür müssen allerdings große Datenmengen übertragen und verarbeitet werden.

Auf Baustellen wird der Überwachungsbereich oftmals von Personen und nicht von Maschinen bzw. Geräten überwacht. So kann beispielsweise ein Abgleich des Bauplans mit dem realen Baufortschritt durch den Bauleiter (mehr oder minder regelmäßig) erfolgen. Dabei überprüft der Bauleiter beispielsweise welche Bauziele (z. B. Fertigstellung 3. Etage im Hochbau) im gegebenen Zeitrahmen erreicht/nicht erreicht wurden. Somit ist eine Ursachenanalyse für Bauverzug nur innerhalb eines groben zeitlichen Rasters möglich und ist mit einem erheblichen personellen Aufwand verbunden.

Für eine zeitgenaue Prozessüberwachung in einem Überwachungsbereich gibt es derzeit nur sehr aufwändige und logistisch kaum realisierbare Überwachungssysteme. Sollen also beispielsweise Tätigkeiten, Phasen eines Prozesses oder Ereignisse in einem Überwachungsbereich überwacht werden, so gibt es bisher kein einfaches und kostengünstig zu realisierendes Überwachungssystem.

Die Druckschrift EP2988105A2 offenbart eine Vorrichtung und ein Verfahren zur automatischen Erkennung und Klassifizierung von hörbaren akustischen Signalen in einem Überwachungsbereich.

Die Druckschrift US5703835A offenbart ein System zur Erkennung eines Schussereignisses, zur effektiven Kontrolle der Sicherheit einer städtischen Umgebung.

Die Druckschrift DE102012211154A1 offenbart ein Überwachungssystem zur Überwachung eines Überwachungsbereichs mit einer Mehrzahl von Mikrofonen zur Anordnung in dem Überwachungsbereich und zur Aufnahme von Audiosignalen von einem Objekt als Audiosignalquelle in dem Überwachungsbereich. Mit einem Analysemodul wird das Audiosignal klassifiziert und mit einem Lokalisierungsmodul wird eine Position des Objekts durch akustische Ortung in dem Überwachungsbereich lokalisiert.

In Anbetracht dessen besteht ein Bedarf nach einem Konzept, das einen besseren Kompromiss zwischen einer zeitgenauen und räumlichen Prozessüberwachung, einem einfachen logistisch realisierbaren System und einer Reduzierung der zu übertragenden Datenmenge von dem Überwachungsbereich zu beispielsweise einem zentralen Server liefert.

Diese Aufgabe wird durch die unabhängigen Patentansprüche gelöst.

Erfindungsgemäße Weiterbildungen sind in den Unteransprüchen definiert.

### Zusammenfassung der Erfindung

Die Erfindung, die in den Ansprüchen 1 und 14 definiert ist, betrifft eine Vorrichtung zur akustischen Überwachung eines Überwachungsbereichs. Die Vorrichtung weist ein erstes Sensorsystem mit einem ersten akustischen Sensor, einem ersten Prozessor und einer ersten Übertragungseinrichtung, das an einer ersten Stelle des Überwachungsbereichs anbringbar ist, und ein zweites Sensorsystem mit einem zweiten akustischen Sensor, einem zweiten Prozessor und einer zweiten Übertragungseinrichtung, das an einer zweiten Stelle des Überwachungsbereichs anbringbar ist, die sich von der ersten Stelle unterscheidet, auf. Der erste Prozessor ist ausgebildet, um ein von dem ersten akustischen Sensor detektiertes erstes Audiosignal zu klassifizieren, um ein erstes Klassifizierungsergebnis zu erhalten und der zweite Prozessor ist ausgebildet, um ein von dem zweiten akustischen Sensor detektiertes zweites Audiosignal zu klassifizieren, um ein zweites Klassifizierungsergebnis zu erhalten. Zudem ist die erste Übertragungseinrichtung ausgebildet, um das erste Klassifizierungsergebnis an eine zentrale Auswertungseinrichtung zu übertragen und die zweite Übertragungseinrichtung ist ausgebildet, um das zweite Klassifizierungsergebnis an die zentrale Auswertungseinrichtung zu übertragen. Die Vorrichtung weist außerdem die zentrale Auswertungseinrichtung auf, wobei die zentrale Auswertungseinrichtung ausgebildet ist, um das erste Klassifizierungsergebnis zu empfangen und das zweite Klassifizierungsergebnis zu empfangen, und um abhängig von dem ersten Klassifizierungsergebnis und dem zweiten Klassifizierungsergebnis eine Überwachungsausgabe für den Überwachungsbereich zu erzeugen.

Diese erfindungsgemäße Vorrichtung basiert auf der Erkenntnis, dass das durch den akustischen Sensor (z. B. der erste akustische Sensor oder der zweite akustische Sensor) detektierte Audiosignal (z. B. das erste Audiosignal oder das zweite Audiosignal) mittels des Prozessors (z. B. dem ersten Prozessor oder dem zweiten Prozessor) klassifiziert wird, um ein Klassifizierungsergebnis (z. B. das erste Klassifizierungsergebnis oder das zweite Klassifizierungsergebnis), das mit der Übertragungseinrichtung (z. B. der ersten Übertragungseinrichtung oder der zweiten Übertragungseinrichtung) an eine zentrale Auswertungseinrichtung übertragen wird, zu erhalten, wodurch beispielsweise nicht das komplette Audiosignal, sondern nur ein Klassifizierungsergebnis übertragen wird. Durch diese Maßnahme wird eine sehr kleine Datenmenge in Form des Klassifizierungsergebnisses übertragen, wodurch die Übertragung sehr schnell und effizient erfolgen kann. Zudem ist das zweite Sensorsystem an einer zweiten Stelle des Überwachungsbereichs anbringbar, die sich von der ersten Stelle, an die das erste Sensorsystem anbringbar ist, unterscheidet, wodurch der Überwachungsbereich zusätzlich zu einer zeitgenauen Prozessüberwachung auch räumlich überwacht werden kann.

Die Vorrichtung ist zudem ein einfach logistisch realisierbares System, da das erste Sensorsystem und das zweite Sensorsystem individuell basierend auf dem Überwachungsbereich an einer ersten Stelle bzw. einer zweiten Stelle des Überwachungsbereichs anbringbar sind. Außerdem kann die zentrale Auswertungseinrichtung beispielsweise mit der ersten/zweiten Übertragungseinrichtung des ersten/zweiten Sensorsystems kabellos verbunden sein, wodurch der Nutzer der Vorrichtung beispielsweise die zentrale Auswertungseinrichtung entfernt von dem Überwachungsbereich anordnen kann, um beispielsweise den Überwachungsbereich ohne Anwesenheit des Nutzers von Fern überwachen zu können. So kann die zentrale Auswertungseinrichtung beispielsweise ausgelegt sein, um den Nutzer der Vorrichtung beispielsweise an einem externen Computer, einem mobilen Gerät, wie zum Beispiel einem Mobiltelefon oder einem Tablet, die Überwachungsausgabe für den Überwachungsbereich bereitzustellen. Dabei kann die Überwachungsausgabe beispielsweise eine Information umfassen, die anzeigt, dass in dem Überwachungsbereich alles nach Plan läuft oder von einem Plan abweicht. Die Überwachungsausgabe kann aber auch beispielsweise eine Liste an zeitlichen und räumlichen Tätigkeiten, Ereignissen oder Phasen eines Prozesses in dem Überwachungsbereich darstellen.

Gemäß einem Beispiel können die erste Übertragungseinrichtung, die zweite Übertragungseinrichtung und die zentrale Auswertungseinrichtung ausgebildet sein, um drahtlos gemäß einem Mobilfunkprotokoll miteinander zu kommunizieren. Somit ist es nicht nötig, dass die erste Übertragungseinrichtung, die zweite Übertragungseinrichtung und die zentrale Auswertungseinrichtung per Kabel verbunden sind, was darin resultieren kann, dass der Nutzer nicht an dem Überwachungsbereich anwesend sein muss, um die Überwachungsausgabe für den Überwachungsbereich zu erhalten, da die zentrale Auswertungseinrichtung durch die drahtlose Kommunikation fern von dem Überwachungsbereich bei dem Nutzer angeordnet sein kann.

Gemäß einem Ausführungsbeispiel kann das erste Klassifizierungsergebnis und das zweite Klassifizierungsergebnis ausgebildet sein, um verwendete Geräte in dem Überwachungsbereich, Tätigkeiten in dem Überwachungsbereich, Lautstärken in dem Überwachungsbereich, Phasen eines Prozesses in dem Überwachungsbereich oder eine Übereinstimmung zumindest eines Teils des ersten Audiosignals oder des zweiten Audiosignals mit einem vorbestimmten Klassifizierungsergebnis anzuzeigen. So kann beispielsweise das erste oder zweite Audiosignal ein Bohrgeräusch sein. Dementsprechend würde der Prozessor bei einer Klassifizierung in der Kategorie Geräte in dem Überwachungsbereich das Klassifizierungsergebnis Bohrer erhalten und bei einer Klassifizierungskategorie Tätigkeiten in dem Überwachungsbereich, würde der Prozessor das Klassifizierungsergebnis bohren erhalten. Einer Tätigkeit in dem Überwachungsbereich kann einen Prozess in dem Überwachungsbereich, eine verwendete Maschine in dem Überwachungsbereich oder eine menschliche Aktion in dem Überwachungsbereich umfassen. Das Bohrgeräusch kann aber auch in Lautstärken klassifiziert werden, wodurch beispielsweise das erste Klassifizierungsergebnis oder das zweite Klassifizierungsergebnis eine grobe Klassifizierung, wie zum Beispiel sehr laut, laut, angenehm laut, leise, sehr leise, etc. anzeigen kann, oder eine sehr feine Klassifizierung, wie zum Beispiel eine Schalldruckangabe in der Einheit Pascal, oder eine Schalldruckpegelangabe in der Einheit Dezibel, anzeigen kann. Zeigt das Klassifizierungsergebnis beispielsweise eine Phase eines Prozesses an, so kann das Bohren beispielsweise in eine zweite Phase eingeordnet werden und somit das Klassifizierungsergebnis die zweite Phase anzeigen, oder beispielsweise wenn der Überwachungsbereich eine Baustelle darstellt, kann das Klassifizierungsergebnis anzeigen, dass beispielsweise ein Bauprozess gerade in einer Innenausbauphase ist (dies ist ein Beispiel für eine Zuordnung des Bohrgeräusches zu einer Prozessphase). In dem ersten/zweiten Prozessor kann beispielsweise ein Bohrgeräusch als vorbestimmtes Klassifizierungsergebnis hinterlegt sein, wodurch das erste/zweite Klassifizierungsergebnis eine Übereinstimmung anzeigen kann, was beispielsweise eine logische eins, ein Ping, ein charakteristisches Signal, etc. darstellen kann. Somit wird durch das erste/zweite Klassifizierungsergebnis nicht nur die zu übertragende Datenmenge von einem ersten/zweiten Audiosignal zu einem ersten/zweiten Klassifizierungsergebnis reduziert, sondern das Audiosignal zusätzlich vorausgewertet, wodurch bereits das erste Klassifizierungsergebnis bzw. das zweite Klassifizierungsergebnis bereits anzeigen, was in dem Überwachungsbereich akustisch detektierbar sich ereignet hat. Dadurch lässt sich auf einfachste Weise der Überwachungsbereich überwachen.

Gemäß einem Beispiel kann der erste Prozessor ausgebildet sein, um das erste Audiosignal, detektiert von dem ersten akustischen Sensor, in eine Zeit-Frequenz-Darstellung umzuwandeln und der erste Prozessor kann ausgebildet sein, um mithilfe der Zeit-Frequenz-Darstellung das erste Audiosignal zu klassifizieren, um ein erstes Klassifizierungsergebnis zu erhalten. Die Zeit-Frequenz-Darstellung kann das Spektrum des ersten Audiosignals wiederspiegeln. Unterschiedliche Geräusche können beispielsweise aufgrund ihrer charakteristischen Spektren einer bestimmten Geräuschquelle zugeordnet werden. So entsteht beispielsweise bei rotierenden Maschinenteilen, wie zum Beispiel Pumpen, Turbinen, Elektromotoren usw. ein periodischer Zeitverlauf der Kräfte, was in einem zugehörigen Frequenzspektrum einem Linienspektrum entsprechen kann. Je nach Rotieren des Maschinenteils kann sich das Linienspektrum voneinander unterscheiden. Eine stochastische Geräuschanregung mit einem breitbandigen Frequenzspektrum kann beispielsweise an Zahnflanken zweier im Eingriff stehender Zahnräder, ferner auch an rollenden Rädern, wie zum Beispiel Rollgeräusche von Straßen- und Schienenfahrzeugen, oder auch bei der zerspanenden Materialbearbeitung, wie zum Beispiel beim Fräsen, Drehen, Bohren, Schleifen, Sägen oder Hobeln auftreten.

Jedes Geräusch kann ein individuelles Spektrum (Zeit-Frequenz-Darstellung) aufweisen, wodurch es beispielsweise in dem zur Zeit-Frequenz-Darstellung umgewandelten ersten Audiosignal schnell und leicht von dem ersten Prozessor erkannt werden kann und somit die Klassifizierung des ersten Audiosignals vereinfacht und schneller von dem Prozessor durchgeführt werden kann. Stimmt beispielsweise zumindest ein Teil der Zeit-Frequenz-Darstellung des ersten Audiosignals mit einer Klassifikation (z. B. Spektren von unterschiedlichen Geräten/Maschinen, Spektren von unterschiedlichen Tätigkeiten, etc.) überein, so kann das erste Klassifizierungsergebnis beispielsweise diese Klassifikation anzeigen.

In der Zeit-Frequenz-Darstellung können sich beispielsweise bei einer Überlagerung von zumindest zwei Geräuschen zumindest zwei Spektren der zumindest zwei Geräusche wiederspiegeln. So kann beispielsweise von dem ersten akustischen Sensor ein erstes Audiosignal detektiert werden, das sowohl ein Bohrgeräusch, als auch ein Hammergeräusch aufweisen kann. Dadurch dass das Hammergeräusch ein anderes Frequenzspektrum als das Bohrgeräusch aufweisen kann, kann aus der Zeit-Frequenz-Darstellung des ersten Audiosignals sowohl das Bohren als auch das Hämmern erkannt werden, wodurch das erste Klassifizierungsergebnis ein Bohren und ein Hämmern anzeigen kann.

Gemäß einem Beispiel kann das erste Klassifizierungsergebnis oder das zweite Klassifizierungsergebnis ein Klassifizierungsergebnis für ein Baustellenereignis sein, wobei das Baustellenereignis als eine Gruppe ausgebildet ist, die ein Werkzeuggeräusch, ein Hammerschlaggeräusch, ein Sägegeräusch, ein Bohrgeräusch, ein Presslufthammergeräusch, ein Messgerätegeräusch, ein Maschinengeräusch, ein Krankettengeräusch, ein Betonmischgeräusch, ein Betongießgeräusch, ein Baggergeräusch, ein Walzengeräusch, ein Materialabladegeräusch, ein Abrissgeräusch (z. B. verursacht durch eine Abrissbirne oder einem Sprengsatz) oder ein Gerüstbaugeräusch aufweist. Somit wird ermöglicht, dass die Vorrichtung als Überwachungsbereich beispielsweise eine Baustelle überwacht. Dadurch kann beispielsweise durch die akustische Überwachung festgestellt werden, wann und wo verschiedene Tätigkeiten ausgeführt werden oder Werkzeuge oder Maschinen verwendet werden. Somit können Prozesse und Bauabläufe auf Baustellen zeitgenau und räumlich überwacht werden.

Gemäß einem Beispiel kann das erste Sensorsystem oder das zweite Sensorsystem batteriebetrieben oder akku-betrieben sein. Somit kann das erste Sensorsystem sowie das zweite Sensorsystem unabhängig von einer externen Stromquelle betrieben werden, wodurch das erste Sensorsystem sowie das zweite Sensorsystem individuell und logistisch einfach realisierbar in dem Überwachungsbereich anbringbar sein können. Gemäß einem Ausführungsbeispiel kann der erste akustische Sensor ausgebildet sein, um einen ersten Pegel des ersten Audiosignals zu messen und die erste Übertragungseinrichtung kann ausgebildet sein, um den ersten Pegel an die zentrale Auswertungseinrichtung zu übertragen. Dabei kann der Pegel beispielsweise einen Schalldruck (z. B. in Pascal oder in bar), eine Schallenergie (in Watt), eine Schallleistung (in Watt), eine Schallintensität (z. B. in Watt/m²), ein Schallleistungspegel (z. B. in dB), ein Schallintensitätspegel (z. B. in Dezibel), ein Schalldruckpegel (z. B. in Dezibel), ein Lautstärkepegel (z. B. in Phon oder in Dezibel (A)) oder einer Lautheit (z. B. in Sone) darstellen. Somit wird mit der Vorrichtung nicht nur ermöglicht, das erste Audiosignal zu klassifizieren, sondern zudem den ersten Pegel des ersten Audiosignals zu messen, um damit beispielsweise Lautstärkeüberwachungen in dem Überwachungsbereich durchzuführen.

Gemäß einem Ausführungsbeispiel kann der zweite akustische Sensor ausgebildet sein, um einen zweiten Pegel des zweiten Audiosignals zu messen, wobei die zweite Übertragungseinrichtung ausgebildet sein kann, um den zweiten Pegel an die zentrale Auswertungseinrichtung zu übertragen und wobei die zentrale Auswertungseinrichtung ausgebildet sein kann, um bei einer Übereinstimmung des ersten Klassifizierungsergebnisses mit dem zweiten Klassifizierungsergebnis, in Abhängigkeit des ersten Pegels und des zweiten Pegels eine Quelle des ersten Audiosignals und des zweiten Audiosignals, unter Verwendung von Informationen über die erste Stelle und Informationen über die zweite Stelle, räumlich in dem Überwachungsbereich zu lokalisieren.

Das erste Klassifizierungsergebnis kann beispielsweise eine Klassifizierung eines ersten Schallereignisses (z. B. ein vorbeifahrender LKW) und eines zweiten Schallereignisses (z. B. ein Betonmischgeräusch) aufweisen und das zweite Klassifizierungsergebnis kann ebenfalls eine Klassifizierung des zweiten Schallereignisses (z. B. Betonmischgeräusch) und zusätzlich eines dritten Schallereignisses (z. B. ein Krankettengeräusch) aufweisen. Somit stimmt das erste Klassifizierungsergebnis mit dem zweiten Klassifizierungsergebnis dahingehend überein, dass beide eine Klassifizierung des zweiten Schallereignisses umfassen. Der erste Pegel kann somit ebenfalls sowohl einen Pegel des ersten Schallereignisses als auch des zweiten Schallereignisses umfassen und der zweite Pegel kann ebenfalls einen Pegel des zweiten Schallereignisses und des dritten Schallereignisses umfassen. Stellt die zentrale Auswertungseinrichtung beispielsweise fest, dass der Pegel des zweiten Schallereignisses des ersten Pegels geringer ist, als der Pegel des zweiten Schallereignisses des zweiten Pegels, so kann die zentrale Auswertungseinrichtung daraus darauf schließen, dass die Quelle des ersten Audiosignals und des zweiten Audiosignals (z. B. des zweiten Schallereignisses) näher an dem zweiten Sensorsystem angeordnet ist. Basierend auf dem ersten Pegel und dem zweiten Pegel, sowie auf der ersten Stelle und der zweiten Stelle kann eine Quelle des ersten Audiosignals und des zweiten Audiosignals räumlich in dem Überwachungsbereich sehr genau lokalisiert werden. Dabei kann beispielsweise eine Quelle eines Teils des ersten Audiosignals und zumindest eines Teils des zweiten Audiosignals miteinander übereinstimmen. Gemäß dem hierin beschriebenen Beispiel kann die Übereinstimmung die Quelle des zweiten Schallereignisses darstellen.

Optional kann die Vorrichtung auch das erste Schallereignis und das dritte Schallereignis gemäß dem oben beschriebenen Beispiel in dem Überwachungsbereich räumlich lokalisieren. Dadurch dass beispielsweise das erste Schallereignis nur von dem ersten Sensorsystem detektiert worden ist und das dritte Schallereignis nur von dem zweiten Sensorsystem detektiert worden ist, kann die zentrale Auswertungseinrichtung darauf schließen, dass eine Quelle des ersten Schallereignisses erhalten aus dem ersten Audiosignal in einem Messbereich des ersten Sensorsystems aber außerhalb eines Messbereichs des zweiten Sensorsystems angeordnet ist und eine Quelle des dritten Schallereignisses erhalten aus dem zweiten Audiosignal in dem Messbereich des zweiten Sensorsystems aber außerhalb des Messbereichs des ersten Sensorsystems angeordnet ist.

Gemäß einem Beispiel kann die zentrale Auswertungseinrichtung ausgebildet sein, um bei einem Überschreiten eines oberen Grenzwerts durch den ersten Pegel, dieses Überschreiten in der Überwachungsausgabe anzuzeigen. Somit können mit der Vorrichtung beispielsweise in dem Überwachungsbereich Lautstärken überwacht werden. Müssen beispielsweise Prozesse, Tätigkeiten oder Maschinen in dem Überwachungsbereich leiser als der obere Grenzwert arbeiten, so kann die Überwachungsausgabe darauf hinweisen, wenn dieser obere Grenzwert überschritten wurde.

Gemäß einem Ausführungsbeispiel kann der erste akustische Sensor ausgebildet sein, um das erste Audiosignal zu detektieren, wobei der erste akustische Sensor ausgebildet sein kann, um einen ersten Pegel des ersten Audiosignals zu messen. Der erste akustische Sensor kann auch ausgebildet sein, um den ersten Prozessor oder die erste Übertragungseinrichtung nur bei Überschreiten eines unteren Grenzwerts für den ersten Pegel von einem Schlafmodus in einen Betriebsmodus zu versetzen und der erste Prozessor kann ausgebildet sein, um nur in dem Betriebsmodus das erste Klassifizierungsergebnis oder das zweite Klassifizierungsergebnis zu bestimmen, oder die erste Übertragungseinrichtung kann ausgebildet sein, um nur in dem Betriebsmodus eine Übertragung durchzuführen und die erste Übertragungseinrichtung oder der Prozessor können ausgebildet sein, um im Schlafmodus weniger Energie als in dem Betriebsmodus zu verbrauchen. Dadurch dass der Prozessor oder die Übertragungseinrichtung nur bei einem Überschreiten eines unteren Grenzwertes für den Pegel von einem Schlafmodus in einen Betriebsmodus versetzt werden, kann vermieden werden, dass die Vorrichtung Hintergrundrauschen verarbeitet. Es wird somit erreicht, dass der Prozessor nur dann eine Klassifizierung durchführt, wenn in dem Überwachungsbereich ein Schallereignis aufgetreten ist, dessen Pegel höher als der untere Grenzwert ist. So kann beispielsweise der akustische Sensor dauerhaft das erste Audiosignal detektieren und nur zeitweise eine Weiterverarbeitung des ersten Audiosignals beispielsweise durch den Prozessor oder die Übertragungseinrichtung veranlassen. Somit wird beispielsweise im Schlafmodus von der Übertragungseinrichtung oder dem Prozessor kaum Leistung erbracht, wodurch im Schlafmodus beispielsweise weniger Energie als im Betriebsmodus verbraucht werden kann.

Gemäß einem Ausführungsbeispiel kann der erste akustische Sensor ausgebildet sein, um das erste Audiosignal zu detektieren. Dabei kann der erste akustische Sensor ausgebildet sein, um einen ersten Pegel des ersten Audiosignals zu messen und um den ersten Prozessor oder die erste Übertragungseinrichtung so zu setzen, dass dann das erste Klassifizierungsergebnis von dem ersten Prozessor bestimmt wird und an die zentrale Auswertungseinrichtung mittels der ersten Übertragungseinrichtung übertragen wird, wenn der erste Pegel größer als ein unterer Grenzwert ist, und wenn der erste Pegel kleiner oder gleich dem unteren Grenzwert ist, kein erstes Klassifizierungsergebnis von dem ersten Prozessor bestimmt wird und an die zentrale Auswertungseinrichtung mittels der ersten Übertragungseinrichtung übertragen wird. Somit wird ermöglicht, dass der erste Prozessor und die erste Übertragungseinrichtung nur mit dem ersten Audiosignal weiterarbeiten, wenn der erste akustische Sensor erkannt hat, das der gemessene erste Pegel größer ist als der untere Grenzwert, wodurch darauf rückgeschlossen werden kann, dass in dem Überwachungsbereich ein Schallereignis aufgetreten ist. Somit kann vermieden werden, dass die Vorrichtung irrtümlich Schallereignisse in dem Überwachungsbereich anzeigt, obwohl kein Schallereignis aufgetreten ist.

Gemäß einem Ausführungsbeispiel kann das erste Audiosignal, detektiert von dem ersten akustischen Sensor, eine Überlagerung von zumindest zwei Schallereignissen sein. Zudem kann der erste Prozessor ausgebildet sein, um ein Quellentrennungsalgorithmus auf das erste Audiosignal anzuwenden, um die zumindest zwei Schallereignisse zu klassifizieren oder um ein erstes Quellensignal und ein zweites Quellensignal zu erhalten, die die zumindest zwei Schallereignisse darstellen, um das erste Quellensignal und das zweite Quellensignal zu klassifizieren. So können beispielsweise durch dieses Merkmal direkt mit dem Quellentrennungsalgorithmus die zumindest zwei Schallereignisse klassifiziert werden. Der Quellentrennungsalgorithmus kann beispielsweise Klassifizierungssignale mit dem ersten Audiosignal vergleichen, um die zumindest zwei Schallereignisse voneinander zu trennen und gleichzeitig einer Klassifizierung (z. B. einem Klassifizierungssignal) zu ordnen. Alternativ kann der Quellentrennungsalgorithmus das erste Audiosignal auch zunächst in ein erstes Quellensignal und ein zweites Quellensignal trennen, wodurch der Prozessor separat das erste Quellensignal klassifizieren kann und das zweite Quellensignal klassifizieren kann, wodurch bei dieser Alternative der Klassifizierungsprozess des ersten Prozessors in zwei Schritten durchgeführt wird. Durch den Quellentrennungsalgorithmus ist die Vorrichtung ausgebildet, um komplexe überlagerte Schallereignisse in einem Audiosignal zu klassifizieren und mehreren Tätigkeiten, Prozessen oder Maschinen in dem Überwachungsbereich zu ordnen.

Weist der akustische Sensor beispielsweise ein B-Format-Mikrofon auf, so können die zumindest zwei Schallereignisse beispielsweise durch eine räumliche Trennung in zumindest zwei Quellensignale getrennt werden. Somit kann es sich hierbei beispielsweise um einen räumlichen Quellentrennungsalgorithmus handeln. Eine weitere Möglichkeit ist eine spektrale Quellentrennung durch eine DirAC-Methode (Direktionales Audiocoding). Die DirAC-Methode kann einen spektralen Quellentrennungsalgorithmus darstellen. Die hierin beschriebenen Quellentrennungsalgorithmen können innerhalb der Vorrichtung beispielsweise in dem ersten Prozessor des ersten Sensorsystems oder dem zweiten Prozessor des zweiten Sensorsystems angewendet werden, um beispielsweise mit der Vorrichtung auch komplexe überlagerte Schallereignisse auftrennen zu können, um mehrere Ereignisse gleichzeitig in dem Überwachungsbereich überwachen zu können. Gemäß einem Ausführungsbeispiel kann es sich bei dem Quellentrennungsalgorithmus um ein Kernel-Additives-Modell (Kernel-Additives-Modell = Kernel Additive Models siehe z. B. [1]), einem ADRess Algorithmus (Azimut Diskriminierung und Resynthese = azimuth discrimination and resynthesis siehe z. B. [2]), einem FDSI Algorithmus (Frequenz-Domäne Quellenidentifikation = Frequency-domain source identification siehe z. B. [3]) oder einem KAMIR Algorithmus (Kernel-Additive-Modellierung zur Interferenz Reduktion = Kernel additive modeling for interference reduction siehe z. B. [4]) handeln. Alle hierin aufgeführten Aufzählungen von Quellentrennungsalgorithmen sind hierbei als beispielhaft und nicht als abschließend anzusehen.

Gemäß einem Ausführungsbeispiel kann die erste Übertragungseinrichtung ausgebildet sein, um das erste Klassifizierungsergebnis mit ersten örtlichen (z. B. einer Sensor-ID oder der ersten Stelle) oder zeitlichen Informationen an die zentrale Auswertungseinrichtung zu übertragen und wobei die zentrale Auswertungseinrichtung ausgebildet sein kann, um das erste Klassifizierungsergebnis in Verbindung mit den ersten örtlichen und zeitlichen Informationen als Überwachungsausgabe für den Überwachungsbereich zu erzeugen. Für die zeitlichen Informationen kann die erste Übertragungseinrichtung beispielsweise einen Zeitstempel übertragen. Die Überwachungsausgabe kann beispielsweise eine Tabelle darstellen, in der das erste Klassifizierungsergebnis in Verbindung mit den ersten örtlichen und zeitlichen Informationen dargestellt werden kann. Somit wird ermöglicht, dass eine zeitgenaue und räumliche Prozessüberwachung in dem Überwachungsbereich durch die Vorrichtung bewerkstelligt wird. So kann beispielsweise festgestellt werden, welche Maschinen, Tätigkeiten oder Prozesse an der ersten Stelle zu gleichen oder unterschiedlichen Zeitpunkten verwendet wurden.

Gemäß einem Ausführungsbeispiel kann die zentrale Auswertungseinrichtung einen Speicher zum Speichern eines vorgegebenen Prozess-Ablaufplans, der eine Folge von Tätigkeiten in dem Überwachungsbereich aufweist und einen Prozessor zum Anordnen des ersten Klassifizierungsergebnisses und des zweiten Klassifizierungsergebnisses in einer Ordnung, die durch räumliche oder zeitliche Informationen über das erste Sensorsystem definiert ist, aufweisen. Das erste Klassifizierungsergebnis und zweite Klassifizierungsergebnis können auf die Tätigkeiten in dem Überwachungsbereich hinweisen. Der Prozessor kann ausgebildet sein, um den vorgegebenen Prozess-Ablaufplan mit dem angeordneten ersten und zweiten Klassifizierungsergebnis zu vergleichen und eine Überwachungsausgabe in Abhängigkeit zu einem Ergebnis des Vergleichs zu erzeugen. Der vorgegebene Prozess-Ablaufplan kann beispielsweise definieren, zu welchem Zeitpunkt und an welcher Stelle in dem Überwachungsbereich eine bestimmte Tätigkeit oder ein Prozess ausgeführt werden soll oder eine bestimmte Maschine in Betrieb ein soll.

Die Ordnung, in der das erste Klassifizierungsergebnis und das zweite Klassifizierungsergebnis angeordnet sind, kann beispielsweise angeben, wann und an welche Stelle in dem Überwachungsbereich eine bestimmte Tätigkeit oder ein Prozess durchgeführt worden ist, oder eine bestimmte Maschine in Betrieb war. Mittelst des Prozessors kann die zentrale Auswertungseinrichtung den vorgegebenen Prozess-Ablaufplan mit der Ordnung vergleichen und so beispielsweise feststellen, ob zwischen dem vorgegebenen Prozess-Ablaufplan und der Ordnung eine Abweichung aufgetreten ist. Diese Abweichung kann beispielsweise als Ergebnis des Vergleichs angesehen werden. Die Überwachungsausgabe kann beispielsweise die Aussage umfassen "alles läuft nach Plan", "es ist eine Abweichung von dem Plan aufgetreten" oder eine direkte Aussage über die Art der Abweichung zwischen dem Prozess-Ablaufplan und der Ordnung (die Ordnung kann das angeordnete erste und zweite Klassifizierungsergebnis darstellen). Die Überwachungsausgabe kann aber auch ein Lichtsignal darstellen, wie zum Beispiel ein grünes Licht für alles ist nach Plan und ein rotes Licht für es sind Abweichungen in dem Überwachungsbereich aufgetreten. Alternativ kann die Überwachungsausgabe auch ein akustisches Signal sein.

Gemäß einem Ausführungsbeispiel kann die Überwachungsausgabe ein Unterschied zwischen dem vorgegebenen Prozess-Ablaufplan und dem angeordneten ersten und zweiten Klassifizierungsergebnis anzeigen. Hierbei kann die Überwachungsausgabe beispielsweise anzeigen, dass eine Tätigkeit in dem Überwachungsbereich kürzer oder länger gedauert hat als in dem vorgegebenen Prozess-Ablaufplan dafür vorgesehen war oder anzeigen, dass eine andere Tätigkeit zu einem bestimmten Zeitpunkt oder an einem bestimmten Ort durchgeführt wurde, obwohl diese Tätigkeit zu einem anderen Zeitpunkt oder an einem anderen Ort durchgeführt werden sollte.

Gemäß einem Ausführungsbeispiel kann das erste Sensorsystem ausgebildet sein, um mit dem ersten akustischen Sensor durchgehend ein erstes Audiosignal zu detektieren, um das erste Audiosignal in dem Prozessor innerhalb eines ersten maximalen Zeitraums zu klassifizieren, wobei der erste maximale Zeitraum kürzer als fünf Sekunden ist, und wobei die erste Übertragungseinrichtung ausgebildet sein kann, um das erste Klassifizierungsergebnis innerhalb eines zweiten maximalen Zeitraums an die zentrale Auswertungseinrichtung zu übertragen, wobei der zweite maximale Zeitraum kürzer als fünf Sekunde (s) ist. Gemäß einem Ausführungsbeispiel kann der erste maximale Zeitraum oder der zweite maximale Zeitraum auch kürzer als 1°s, 500°ms, 100°ms, 50°ms oder 10°ms sein. Somit wird beispielsweise das erste Audiosignal von dem ersten Prozessor innerhalb kürzester Zeit klassifiziert und von der ersten Übertragungseinrichtung innerhalb kürzester Zeit an die zentrale Auswertungseinrichtung übertragen, wodurch die Vorrichtung ausgebildet sein kann, um eine Echtzeit-Analyse der detektierten Audiosignale durchführen zu können. Somit kann eine zeitgenaue Prozessüberwachung mit der Vorrichtung realisiert werden. Optional kann das zweite Sensorsystem ausgebildet sein, um mit dem zweiten akustischen Sensor durchgehend ein zweites Audiosignal zu detektieren, um das zweite Audiosignal in dem zweiten Prozessor innerhalb des ersten maximalen Zeitraums zu klassifizieren und wobei die zweite Übertragungseinrichtung ausgebildet sein kann, um das zweite Klassifizierungsergebnis innerhalb des zweiten maximalen Zeitraums an die zentrale Auswertungseinrichtung zu übertragen.

Gemäß einem Ausführungsbeispiel kann das erste Sensorsystem ausgebildet sein, um das erste Klassifizierungsergebnis zu einem ersten Zeitpunkt und zu einem zweiten Zeitpunkt mittels des ersten Prozessors zu erhalten und mittels der ersten Übertragungseinrichtung an die zentrale Auswertungseinrichtung zu übertragen. Die zentrale Auswertungseinrichtung kann des Weiteren ausgebildet sein, um das erste Klassifizierungsergebnis des ersten Zeitpunkts und das zweite Klassifizierungsergebnis des zweiten Zeitpunkts in Abhängigkeit des ersten Zeitpunkts oder des zweiten Zeitpunkts zu ordnen und anzugeben. Somit wird ermöglicht, über einen langen Zeitraum den Überwachungsbereich akustisch zu überwachen und eine Langzeit-Auswertung durchzuführen.

Gemäß einem Ausführungsbeispiel kann die erste Übertragungseinrichtung ausgebildet sein, um an die zentrale Auswertungseinrichtung eine Identifikation des ersten Sensorsystems mit dem ersten Klassifizierungsergebnis zu übertragen. Die zweite Übertragungseinrichtung kann ausgebildet sein, um an die zentrale Auswertungseinrichtung eine Identifikation des zweiten Sensorsystems mit dem zweiten Klassifizierungsergebnis zu übertragen. Die zentrale Auswertungseinrichtung kann einen Speicher aufweisen, wobei der Speicher eine Zuordnung der Identifikation des ersten Sensorsystems mit der ersten Stelle und der Identifikation des zweiten Sensorsystems mit der zweiten Stelle aufweisen kann. Die zentrale Auswertungseinrichtung kann ausgelegt sein, um basierend auf der Identifikation des ersten Sensorsystems aus dem Speicher die erste Stelle zu ermitteln und basierend auf der Identifikation des zweiten Sensorsystems aus dem Speicher die zweite Stelle zu ermitteln und um basierend auf der ersten Stelle, der zweiten Stelle, dem ersten Klassifizierungsergebnis oder dem zweiten Klassifizierungsergebnis einen ersten Quellenbereich des ersten Audiosignals und einen zweiten Quellenbereich des zweiten Audiosignals räumlich in dem Überwachungsbereich zu lokalisieren. Unter einer Identifikation kann beispielsweise eine Sensor-ID verstanden werden. Somit wird ermöglicht, dass allein durch die Identifikation des ersten Sensorsystems bzw. des zweiten Sensorsystems ein Schallereignis in dem Überwachungsbereich lokalisiert werden kann. Dies basiert auf der Erkenntnis, dass das erste Sensorsystem als auch das zweite Sensorsystem einen Bereich aufweist, in dem ein Audiosignal innerhalb des Überwachungsbereichs detektiert werden kann. Dabei kann sich der Bereich für das erste Sensorsystem mit dem Bereich für das zweite Sensorsystem zu einem Teil überschneiden. Nehmen also sowohl das erste Sensorsystem als auch das zweite Sensorsystem das gleiche Schallereignis wahr (z. B. das erste Klassifizierungsergebnis und das zweite Klassifizierungsergebnis stimmen überein), so kann die zentrale Auswertungseinrichtung darauf schließen, dass der erste Quellenbereich mit dem zweiten Quellenbereich übereinstimmt und in einem Überschneidungsbereich des ersten Sensorsystems mit dem zweiten Sensorsystem angeordnet ist. Nimmt hingegen beispielsweise nur das erste Sensorsystem das Schallereignis auf (z. B. das erste Klassifikationsergebnis stimmt nicht mit dem Klassifikationsergebnis überein), so kann die zentrale Auswertungseinrichtung darauf schließen, dass der erste Quellenbereich in einem Aufnahmebereich des ersten Sensorsystems, aber nicht in einem überschneidenden Aufnahmebereich mit dem zweiten Sensorsystem angeordnet ist.

Gemäß einem Ausführungsbeispiel kann die erste Übertragungseinrichtung ausgebildet sein, um nur das erste Klassifizierungsergebnis oder ein verarbeitetes erstes Audiosignal an die zentrale Auswertungseinrichtung zu übertragen und die zweite Übertragungseinrichtung kann ausgebildet sein, um nur das zweite Klassifizierungsergebnis oder ein verarbeitetes zweites Audiosignal an die zentrale Auswertungseinrichtung zu übertragen. Somit wird ermöglicht, dass zwischen der Übertragungseinrichtung und der zentralen Auswertungseinrichtung nur eine geringe Datenmenge übertragen wird. Zudem wird nicht das originale erste Audiosignal an die zentrale Auswertungseinrichtung übertragen, sondern beispielsweise verzerrt als unverständliches Signal, wodurch trotz Verzerrung aus dem ersten Audiosignal ein erstes Schallereignis beispielsweise klassifiziert werden kann, aber beispielsweise keine Sprache mehr verständlich ist. Hierdurch können mit der Vorrichtung beispielsweise Datenschutzanforderungen gewährleistet werden.

Die erste Übertragungseinrichtung ist ausgelegt, um nur dann ein erstes Signal an die zentrale Auswertungseinrichtung zu übertragen, wenn das erste Klassifikationsergebnis mit einem ersten vorbestimmten Klassifikationsergebnis übereinstimmt. Die zweite Übertragungseinrichtung ist ausgelegt, um nur dann ein zweites Signal an die zentrale Auswertungseinrichtung zu übertragen, wenn das zweite Klassifikationsergebnis mit einem zweiten vorbestimmten Klassifikationsergebnis übereinstimmt. Die zentrale Auswertungseinrichtung ist ausgelegt, um anhand des ersten Signals zu zählen, wie oft pro Zeitdauer das erste Sensorsystem das erste vorbestimmte Klassifizierungsergebnis ermittelt hat oder um anhand des zweiten Signals zu zählen, wie oft pro Zeitdauer das zweite Sensorsystem das zweite vorbestimmte Klassifizierungsergebnis ermittelt hat. Dabei kann die zentrale Auswertungseinrichtung beispielsweise das erste Signal oder das zweite Signal zählen. Das erste Signal bzw. das zweite Signal kann beispielsweise eine logische 1, ein Ping oder ein charakteristisches Signal sein. Zudem können das erste und das zweite vorbestimmte Klassifizierungsergebnis miteinander übereinstimmen. So kann beispielsweise das vorbestimmte Klassifikationsergebnis ein vorbeifahrendes Auto sein, wodurch die zentrale Auswertungseinrichtung ausgelegt ist, um zu ermitteln, wie oft ein Auto an dem ersten Sensorsystem oder dem zweiten Sensorsystem vorbeifährt. Optional können das erste und das zweite vorbestimmte Klassifikationsergebnis sich auch voneinander unterscheiden. In diesem Fall kann beispielsweise das erste vorbestimmte Klassifikationsergebnis einem vorbeifahrenden Auto entsprechen und das zweite vorbestimmte Klassifikationsergebnis einem vorbeifahrenden LKW entsprechen. Somit ist die Vorrichtung ausgelegt, um beispielsweise festzustellen, wie viele Autos bzw. LKWs innerhalb eines Überwachungsbereichs an dem ersten Sensorsystem bzw. dem zweiten Sensorsystem vorbeifahren. Somit wird ermöglicht mit der Vorrichtung eine Auslastung eines Verkehrsnetzes zu überwachen.

Gemäß einem Ausführungsbeispiel kann das erste vorbestimmte Klassifikationsergebnis und das zweite vorbestimmte Klassifikationsergebnis ein Klassifikationsergebnis für ein Fahrzeug (z. B. Auto, Bus, LKW, Zug (Unterscheidung Güterzug/Personenzug), evtl. Flugzeug, Fahrrad) sein. Der erste Überwachungsbereich und der zweite Überwachungsbereich können beispielsweise eine Straße, ein Straßennetz oder ein Schienennetz sein, wobei das erste Sensorsystem oder das zweite Sensorsystem an Straßen oder Schienen anbringbar sind. Die zentrale Auswertungseinrichtung kann ausgebildet sein, um eine Auslastung des Überwachungsbereichs pro Stelle oder Gruppe an Stellen zu liefern. Somit kann die Vorrichtung beispielsweise ausgebildet sein, um zeitgenau und räumlich genau eine Straße, ein Straßennetz oder ein Schienennetz zu überwachen. So kann die Vorrichtung beispielsweise für eine verkehrsabhängige Ampelschaltung genutzt werden. Stellt die Vorrichtung beispielsweise eine große Auslastung des Überwachungsbereichs für eine bestimmte Stell fest, so kann veranlasst werden, dass eine Ampel schneller von Rot auf Grün schaltet und geringere Wartezeiten an dem Straßennetz aufkommen. Wird hingegen nur eine geringe Auslastung in dem Straßennetz von der Vorrichtung festgestellt, so kann beispielsweise veranlasst werden, dass eine Ampel an der Stelle ein verlangsamtes Umschaltverhalten aufweist.

Gemäß einem Beispiel kann der Überwachungsbereich eine Baustelle, eine Fabrikhalle mit Maschinen, eine Maschine, oder ein bewohnter Ort oder ein Teil eines bewohnten Ortes sein. Dabei kann es sich beispielsweise bei einem bewohnten Ort nicht nur um ein Wohngebäude handeln, sondern auch um ein Straßennetz das in einem Wohnort oder zumindest teilweise durch einen Wohnort führt. Somit ist die Vorrichtung individuell für verschiedenste Überwachungsbereiche einsetzbar.

Die Erfindung schafft ein Verfahren zur akustischen Überwachung eines Überwachungsbereichs mit den Schritten Anbringen eines ersten Sensorsystems mit einem ersten akustischen Sensor, einem ersten Prozessor und einer ersten Übertragungseinrichtung an einer ersten Stelle des Überwachungsbereichs, Anbringen eines zweiten Sensorsystems mit einem zweiten akustischen Sensor, einem zweiten Prozessor und einer zweiten Übertragungseinrichtung an einer zweiten Stelle des Überwachungsbereichs, die sich von der ersten Stelle unterscheidet, Klassifizieren eines von dem ersten akustischen Sensor detektierten ersten Audiosignals mit dem ersten Prozessor, um ein erstes Klassifizierungsergebnis zu erhalten, Klassifizieren eines von dem zweiten akustischen Sensor detektierten zweiten Audiosignals mit dem zweiten Prozessor, um ein zweites Klassifizierungsergebnis zu erhalten, übertragen des ersten Klassifizierungsergebnisses an eine zentrale Auswertungseinrichtung mit einer ersten Übertragungseinrichtung, Übertragen des zweiten Klassifizierungsergebnisses an die zentrale Auswertungseinrichtung mit der zweiten Übertragungseinrichtung, Empfangen des ersten Klassifizierungsergebnisses und des zweiten Klassifizierungsergebnisses mit der zentralen Auswertungseinrichtung und Erzeugen einer Überwachungsausgabe für den Überwachungsbereich abhängig von dem ersten Klassifizierungsergebnis und dem zweiten Klassifizierungsergebnis mit der zentralen Auswertungseinrichtung.

Die Erfindung betrifft auch ein Computerprogramm mit einem Programmcode zur Durchführung eines Verfahrens wenn das Programm auf dem Computer abläuft.

### Figurenkurzbeschreibung

Alle hierin erläuterten Beispiele, die nicht alle Merkmale, oder Äquivalente derselben, eines der unabhängigen Ansprüche aufweisen, dienen dazu das Verständnis der Erfindung zu erleichtern.

Ausführungsbeispiele gemäß der vorliegenden Erfindung werden nachfolgend Bezug nehmend auf die beiliegenden Figuren näher erläutert. Hinsichtlich der dargestellten schematischen Figuren wird darauf hingewiesen, dass die dargestellten Funktionsblöcke sowohl als Elemente oder Merkmale der erfindungsgemäßen Vorrichtung als auch als entsprechende Verfahrensschritte des erfindungsgemäßen Verfahrens zu verstehen sind, und auch entsprechende Verfahrensschritte des erfindungsgemäßen Verfahrens davon abgeleitet werden können. Es zeigen:
- Fig. 1: eine schematische Darstellung einer Vorrichtung gemäß einem Ausführungsbeispiel der vorliegenden Erfindung;
- Fig. 2: eine schematische Darstellung einer Vorrichtung, die ausgelegt ist, um zumindest zwei Schallereignisse in einem Überwachungsbereich zu detektieren gemäß einem Ausführungsbeispiel der vorliegenden Erfindung;
- Fig. 3: eine schematische Darstellung einer Vorrichtung, die ausgelegt ist, um Schallereignisse in dem Überwachungsbereich zu lokalisieren gemäß einem Ausführungsbeispiel der vorliegenden Erfindung;
- Fig. 4: eine schematische Darstellung einer Vorrichtung mit zumindest fünft Sensorsystemen gemäß einem Ausführungsbeispiel der vorliegenden Erfindung;
- Fig. 5: eine tabellarische Darstellung einer Überwachungsausgabe für den Überwachungsbereich, erzeugt durch eine Vorrichtung gemäß einem Ausführungsbeispiel der vorliegenden Erfindung; und
- Fig. 6: ein Blockdiagramm eines Verfahrens zur akustischen Überwachung eines Überwachungsbereichs gemäß einem Ausführungsbeispiel der vorliegenden Erfindung.

### Detaillierte Beschreibung der Ausführungsbeispiele gemäß der Erfindung

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Element untereinander austauschbar ist bzw. aufeinander angewendet werden kann.

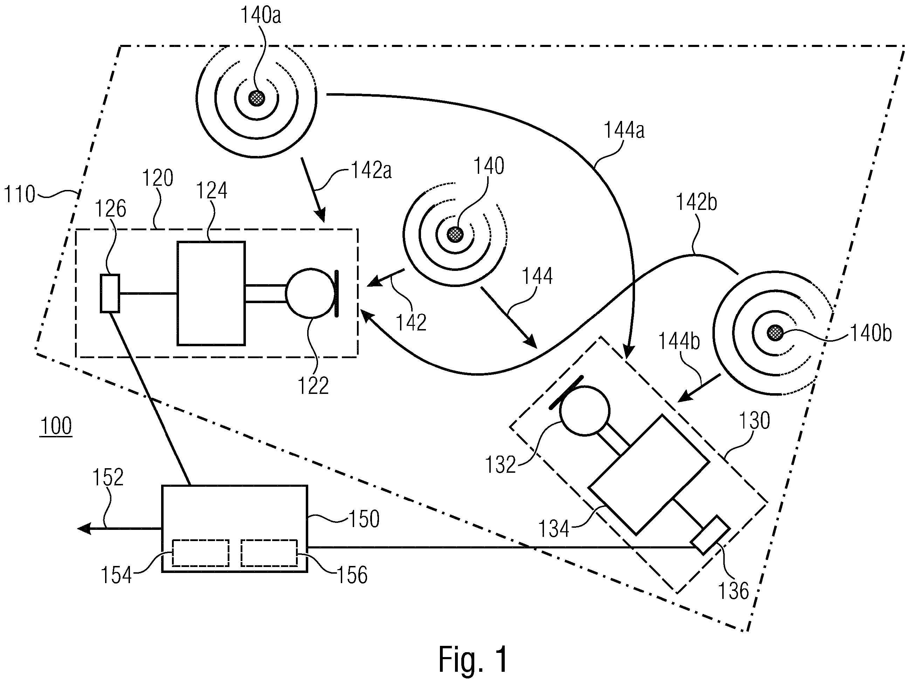

Fig. 1 zeigt eine Darstellung einer Vorrichtung 100 gemäß einem Ausführungsbeispiel der vorliegenden Erfindung zur akustischen Überwachung eines Überwachungsbereichs 110. Die Vorrichtung 100 weist ein erstes Sensorsystem 120 mit einem ersten akustischen Sensor 122, einem ersten Prozessor 124 und einer ersten Übertragungseinrichtung 126, das an einer ersten Stelle des Überwachungsbereichs 110 anbringbar ist, und ein zweites Sensorsystem 130 mit einem zweiten akustischen Sensor 132, einem zweiten Prozessor 134 und einer zweiten Übertragungseinrichtung 136, das an einer zweiten Stelle des Überwachungsbereichs 110 anbringbar ist, die sich von der ersten Stelle unterscheidet, auf. Hierbei kann es sich bei dem ersten akustischen Sensor 122 oder dem zweiten akustischen Sensor 132 beispielsweise um einen passiven akustischen Sensor (wie z. B. ein Mikrofon) handeln, bei dem ein Geräusch, das ein beobachteter Vorgang/Prozess/Tätigkeit in dem Überwachungsbereich 110 selbst erzeugt (z. B. das Schallereignis 140) ausgewertet wird. Alternativ kann es sich bei dem ersten akustischen Sensor 120 und dem zweiten akustischen Sensor 130 auch um einen aktiven akustischen Sensor handeln. Ein aktiver akustischer Sensor kann beispielsweise ein Ultraschallfeld erzeugen, das von dem beobachteten Vorgang/Prozess/Tätigkeit in dem Überwachungsbereich 110 (wie z. B. das Schallereignis 140) beeinflusst wird. So können zum Beispiel aus Schallreflexionen Veränderungen in dem Überwachungsbereich 110 detektiert werden.

Gemäß einem Beispiel sind in dem ersten Sensorsystem 120 der erste akustische Sensor 122, der erste Prozessor 124 und die erste Übertragungseinrichtung 126 miteinander verbunden. Genauso können in dem zweiten Sensorsystem 130 der zweite akustische Sensor 132, der zweite Prozessor 134 und die zweite Übertragungseinrichtung 136 miteinander verbunden sein. So kann beispielsweise der akustische Sensor 122, 132 mit dem Prozessor 124, 134 verbunden sein und der Prozessor 124, 134 mit der Übertragungseinrichtung 124, 136 verbunden sein.

Gemäß einem Beispiel kann das erste Sensorsystem 120 oder das zweite Sensorsystem 130 batteriebetrieben oder akku-betrieben sein. Dadurch kann das erste Sensorsystem 120 oder das zweite Sensorsystem 130 autark arbeiten und somit individuell basierend auf dem Überwachungsbereich 110 in dem Überwachungsbereich 110 angebracht werden. Hierfür ist somit beispielsweise keine externe Stromversorgung nötig, wodurch auch Überwachungsbereiche 110 mit der Vorrichtung 100 überwacht werden können, die keine Energieversorgung für die Vorrichtung 100 aufweisen.

Die Vorrichtung 100 weist des Weiteren eine zentrale Auswertungseinrichtung 150 auf, die mit der ersten Übertragungseinrichtung 126 und der zweiten Übertragungseinrichtung 136 beispielsweise per Kabel verbunden ist oder ausgebildet ist, um mit der ersten Übertragungseinrichtung 126 und der zweiten Übertragungsreinrichtung 136 drahtlos gemäß einem Mobilfunkprotokoll miteinander zu kommunizieren.

Der erste Prozessor 124 ist ausgebildet, um ein von dem ersten akustischen Sensor detektiertes erstes Audiosignal 142 zu klassifizieren, um ein erstes Klassifizierungsergebnis zu erhalten und der zweite Prozessor 134 ist ausgebildet, um ein von dem zweiten akustischen Sensor 132 detektiertes zweites Audiosignal 144 zu klassifizieren, um ein zweites Klassifizierungsergebnis zu erhalten. Dabei kann beispielsweise das erste Audiosignal 142 und das zweite Audiosignal 144 das gleiche Schallereignis 140 als Quelle aufweisen. Es ist aber auch möglich, dass
das erste Audiosignal 142 von einem anderen Schallereignis 140 erzeugt wird, als das zweite Audiosignal 144, dabei können sich die beiden unterschiedlichen Schallereignisse beispielsweise in ihrer Position in dem Überwachungsbereich 110 unterscheiden.

Gemäß einem Ausführungsbeispiel kann das erste Klassifizierungsergebnis und das zweite Klassifizierungsergebnis ausgebildet sein, um Geräte in dem Überwachungsbereich, Tätigkeiten in dem Überwachungsbereich, Lautstärken in dem Überwachungsbereich, Phasen eines Prozesses in dem Überwachungsbereich oder eine Übereinstimmung zumindest eines Teils des ersten Audiosignals 142 oder des zweiten Audiosignals 144 mit einem vorbestimmten Klassifizierungsergebnis anzuzeigen. So kann beispielsweise das Schallereignis 140, das beispielsweise das erste Audiosignal 142 und das zweite Audiosignal 144 verursacht, ein Fräsgeräusch sein, wodurch das erste Klassifizierungsergebnis und das zweite Klassifizierungsergebnis beispielsweise eine Fräse (Gerät in dem Überwachungsbereich 110) anzeigen. Als eine Tätigkeit in dem Überwachungsbereich 110 kann beispielsweise ein an dem ersten Sensorsystem 120 oder dem zweiten Sensorsystem 130 in dem Überwachungsbereich 110 vorbeifahrendes Auto, vorbeifahrender LKW oder vorbeifahrender Zug angesehen werden. Als eine Tätigkeit in dem Überwachungsbereich können aber auch Aktionen wie Bohren, Fräsen, Drehen, Schleifen, Sägen, Hobeln, etc. verstanden werden. Soll der Prozessor 124, 134 nach Lautstärken klassifizieren, so kann das erste Klassifizierungsergebnis und das zweite Klassifizierungsergebnis beispielsweise eine exakte Lautstärke anzeigen oder eine Einordnung in eine Lautstärkengruppe. Bei einer Klassifizierung in Phasen eines Prozesses kann beispielsweise eine einzelne Maschine (z. B. ein Roboter, der mehrere Aktionen ausführen kann) überwacht werden. So kann beispielsweise eine Maschine mehrere unterschiedliche Aktionen durchführen, die jeweils ein unterschiedliches Schallereignis 140 aussenden können, wodurch das jeweilige Schallereignis 140 einer bestimmten Phase, in dem das Gerät, die Maschine gerade arbeitet, zugeordnet werden kann. So kann beispielsweise eine Maschine die Phasen Positionieren eines Werkstücks, CNC-Bearbeitung des Werkstücks, Verschwei-ßen des Werkstücks mit einem anderen Werkstück, Kühlen des Werkstücks und Übergabe des Werkstücks aufweisen. Unter Phasen eines Prozesses können aber auch unterschiedliche Phasen, beispielsweise eines Bauprozesses auf einer Baustelle gemeint sein. Dadurch kann die Vorrichtung 100 beispielsweise überwachen, ob verschiedene Bauphasen zeitlich und räumlich korrekt ablaufen.

So kann das erste Klassifizierungsergebnis oder das zweite Klassifizierungsergebnis beispielsweise ein Klassifizierungsergebnis für ein Baustellenereignis sein, wobei das Baustellenereignis als eine Gruppe ausgebildet sein kann, die ein Werkzeuggeräusch, ein Hammerschlaggeräusch, ein Sägegeräusch, ein Bohrgeräusch, ein Presslufthammergeräusch, ein Messgerätgeräusch, ein Maschinengeräusch, ein Krankettengeräusch, ein Betonmischgeräusch, ein Betongießgeräusch, ein Baggergeräusch, ein Walzengeräusch, ein Materialabladegeräusch, ein Abrissgeräusch oder ein Gerüstbaugeräusch aufweist. Alle hierin aufgeführten Aufzählungen für mögliche erste Klassifizierungsergebnisse oder zweite Klassifizierungsergebnisse sind hierbei als beispielhaft und nicht als abschließend anzusehen.

Gemäß einem Beispiel kann somit der Überwachungsbereich 110 eine Baustelle, eine Fabrikhalle mit Maschinen, eine Maschine, oder ein bewohnter Ort oder ein Teil eines bewohnten Ortes sein. Alle hierin aufgeführten Aufzählungen für den möglichen Überwachungsbereich sind hierbei als beispielhaft und nicht als abschließend anzusehen.

Die erste Übertragungseinrichtung 126 ist ausgebildet, um das erste Klassifizierungsergebnis an die zentrale Auswertungseinrichtung 150 zu übertragen und die zweite Übertragungseinrichtung 136 ist ausgebildet, um das zweite Klassifizierungsergebnis an die zentrale Auswertungseinrichtung 140 zu übertragen. Die zentrale Auswertungseinrichtung 150 ist ausgebildet, um das erste Klassifizierungsergebnis zu empfangen und das zweite Klassifizierungsergebnis zu empfangen, und um abhängig von dem ersten Klassifizierungsergebnis und dem zweiten Klassifizierungsergebnis eine Überwachungsausgabe 152 für den Überwachungsbereich 110 zu erzeugen.

Gemäß einem Ausführungsbeispiel kann der erste akustische Sensor 122 ausgebildet sein, um einen ersten Pegel des ersten Audiosignals 142 zu messen und die erste Übertragungseinrichtung 126 kann ausgebildet sein, um den ersten Pegel an die zentrale Auswertungseinrichtung 150 zu übertragen. Somit kann beispielsweise mit der Vorrichtung 100 in dem Überwachungsbereich 110 überwacht werden, ob Pegelgrenzwerte innerhalb des Überwachungsbereichs 110 eingehalten werden. Mit dem ersten Pegel kann aber auch überwacht werden, ob beispielsweise Fluidleitungssysteme funktionstüchtig arbeiten. So kann beispielsweise das erste Sensorsystem 120 oder das zweite Sensorsystem 130 an dem Leitungssystem angebracht werden, um beispielsweise ein kontinuierliches Rauschen des Fluides durch die Leitungen zu detektieren. Kommt es beispielsweise zu einer Verengung der Leitung (z. B. durch Kalkablagerungen, Verschmutzungen, etc.), so kann sich beispielsweise der erste Pegel des Rauschens ändern. Auch wenn beispielsweise Löcher in den Leitungen sind, kann sich der erste Pegel ändern und somit mit der Vorrichtung 100 auf nicht funktionsgemäße Leitungen geschlossen werden. Optional kann durch den ersten Pegel mit der Vorrichtung 100 auch Geschwindigkeiten des Fluides innerhalb der Leitung überwacht werden oder eine Geschwindigkeit, mit der das Fluid aus Düsen aus dem Leitungssystem ausdringt oder Verschmutzungen von Düsen (z. B. die Funktionsfähigkeit von Düsen).

Gemäß einem Ausführungsbeispiel kann zusätzlich der zweite akustische Sensor 132 ausgebildet sein, um einen zweiten Pegel des zweiten Audiosignals 144 zu messen und die zweite Übertragungseinrichtung 136 kann ausgebildet sein, um den zweiten Pegel an die zentrale Auswertungseinrichtung 150 zu übertragen. Die zentrale Auswertungseinrichtung 150 kann zum Beispiel ausgebildet sein, um bei einer Übereinstimmung des ersten Klassifizierungsergebnisses (kommend von der ersten Übertragungseinrichtung 126) mit dem zweiten Klassifizierungsergebnis (z. B. Empfangen von der zweiten Übertragungseinrichtung 136), in Abhängigkeit des ersten Pegels und des zweiten Pegels eine Quelle (z. B. das Schallereignis 140) des ersten Audiosignals 142 und des zweiten Audiosignals 144, unter Verwendung von Informationen über die erste Stelle und Informationen über die zweite Stelle, räumlich in dem Überwachungsbereich 110 zu lokalisieren. Gemäß Fig. 1 ist beispielsweise die Quelle 140 des ersten Audiosignals 142 und des zweiten Audiosignals 144 näher an dem ersten Sensorsystem 120 angeordnet als an dem zweiten Sensorsystem 130, wodurch beispielsweise der erste Pegel höher ist als der zweite Pegel. Somit kann die zentrale Auswertungseinrichtung 150 aus einer Kombination des ersten Pegels und des zweiten Pegels daraus schließen, wie weit die Quelle des ersten Audiosignals 142 und des zweiten Audiosignals 144 beispielsweise von dem ersten Sensorsystem 120 und dem zweiten Sensorsystem 130 entfernt positioniert ist und zusätzlich unter Verwendung der Informationen über die erste Stelle (des ersten Sensorsystems 120) und der Informationen über die zweite Stelle (des zweiten Sensorsystems 130) die Quelle 140 sehr genau bzw. exakt in dem Überwachungsbereich 110 räumlich zu lokalisieren.

Der erste Pegel und der zweite Pegel werden gemäß einem Ausführungsbeispiel nur dann für eine Lokalisation der Quelle 140 in dem Überwachungsbereich 110 verwendet, wenn das erste Klassifizierungsergebnis mit dem zweiten Klassifizierungsergebnis übereinstimmt. Dadurch wird sichergestellt, dass das erste Audiosignal 142 und das zweite Audiosignal 144 eine gemeinsame Quelle aufweisen und somit die beiden Pegel (der erste Pegel und der zweite Pegel) für die Lokalisation genutzt werden können. Detektiert beispielsweise der erste akustische Sensor 122 das erste Audiosignal 142a von der Quelle 140a und der zweite akustische Sensor 132 das zweite Audiosignal 144b von der Quelle 140b, so unterscheidet sich beispielsweise die Stelle der Quelle 140a von der Quelle 140b. Wird also beispielsweise von dem zweiten Sensorsystem 130 kein zweites Audiosignal 144a der Quelle 140a detektiert und von dem ersten Sensorsystem 120 kein erstes Audiosignal 142b von der Quelle 140b, so kann das erste Sensorsystem 120 beispielsweise ein erstes Klassifizierungsergebnis erhalten, das anzeigt, dass an der Quelle 140a gebohrt wurde und das zweite Sensorsystem 130 ein zweites Klassifizierungsergebnis erhalten, das anzeigt, dass an der Quelle 140b zum Beispiel gehämmert wurde, wodurch sich das erste Klassifizierungsergebnis von dem zweiten Klassifizierungsergebnis unterscheidet, und somit von der zentralen Auswertungseinrichtung 150 beispielsweise nur grob die Quelle 140a und die Quelle 140b in dem Überwachungsbereich 110 lokalisiert werden können, da die zentrale Auswertungseinrichtung 150 somit nur feststellen kann, dass die Quelle 140a außerhalb des Detektionsbereichs des zweiten Sensorsystems 130 in einer von dem ersten Pegel abhängigen Distanz von dem ersten Sensorsystem 120 angeordnet ist und die Quelle 140b außerhalb des Detektionsbereiches des ersten Sensorsystems 120 in einer von dem zweiten Pegel abhängigen Distanz von dem zweiten Sensorsystem 130 angeordnet ist. Somit ist auch bei unterschiedlichen Klassifizierungsergebnissen eine Lokalisation möglich.

Gemäß einem Ausführungsbeispiel ist die zentrale Auswertungseinrichtung 150 ausgebildet, um bei einem Überschreiten eines oberen Grenzwertes durch den ersten Pegel, dieses Überschreiten in der Überwachungsausgabe 152 anzuzeigen. Somit kann von der zentralen Auswertungseinrichtung 150 beispielsweise festgestellt werden, wenn Tätigkeiten, Prozesse, Phasen in dem Überwachungsbereich 110 zu laut sind und somit den Nutzer der Vorrichtung darauf hinweisen, dass das Schallereignis 140 gedämpft werden sollte.

Gemäß einem Ausführungsbeispiel kann der erste akustische Sensor 122 ausgebildet sein, um das erste Audiosignal 142 zu detektieren und um einen ersten Pegel des ersten Audiosignals 142 zu messen und um den ersten Prozessor 124 oder die erste Übertragungseinrichtung 126 nur bei Überschreiten eines unteren Grenzwerts für den ersten Pegel von einem Schlafmodus in einen Betriebsmodus zu versetzen. Der erste Prozessor 124 kann ausgebildet sein, um nur in dem Betriebsmodus das erste Klassifizierungsergebnis zu bestimmen, oder die erste Übertragungseinrichtung 126 kann ausgebildet sein, um nur in dem Betriebsmodus eine Übertragung durchzuführen. Die erste Übertragungseinrichtung 126 oder der erste Prozessor 124 können ausgebildet sein, um im Schlafmodus weniger Energie als im Betriebsmodus zu verbrauchen. Somit ist beispielsweise nur der erste akustische Sensor 122 in einem dauerhaften Betriebsmodus (z. B. Messungen zu mehreren Zeitpunkten in periodischen Abständen oder stochastisch innerhalb einer Zeitspanne oder eine kontinuierliche Messung des ersten Audiosignals 142 innerhalb einer Zeitspanne) und ausgelegt, um den ersten Prozessor 124 und die erste Übertragungseinrichtung 126 nur dann von einem Schlafmodus in den Betriebsmodus zu setzen, wenn ein Schallereignis beispielsweise einen höheren Pegel aufweist, als das in dem Betriebsmodus des ersten Sensorsystems 120 detektierten Hintergrundrauschens, das beispielsweise unterhalb des unteren Grenzwerts liegt. Da der erste Prozessor 124 und die erste Übertragungseinrichtung 126 in dem Schlafmodus beispielsweise nur in einem "Stand-by"-Modus sind und keine Aktionen durchführen, sondern nur auf den akustischen Sensor warten, um in einen Betriebsmodus geschalten zu werden, wird beispielsweise in dem Schlafmodus weniger Energie verbraucht, als in dem Betriebsmodus.

Gemäß einem Ausführungsbeispiel kann der erste akustische Sensor 122 ausgebildet sein, um das erste Audiosignal 142 zu detektieren, um einen ersten Pegel des ersten Audiosignals 142 zu messen und um den ersten Prozessor 124 oder die erste Übertragungseinrichtung 126 so zu setzen, dass dann das erste Klassifizierungsergebnis von dem ersten Prozessor 124 bestimmt wird und an die zentrale Auswertungseinrichtung 150 mittels der ersten Übertragungseinrichtung 126 übertragen wird, wenn der erste Pegel größer als ein unterer Grenzwert ist und wenn der erste Pegel kleiner oder gleich dem unteren Grenzwert ist, kein erstes Klassifizierungsergebnis von dem ersten Prozessor 124 bestimmt wird und an die zentrale Auswertungseinrichtung 150 mittels der ersten Übertragungseinrichtung 126 übertragen wird. Somit wird beispielsweise solange der erste akustische Sensor 122 nur akustisches Rauschen unterhalb oder gleich dem unteren Grenzwert misst, keine weiteren Schritte, wie zum Beispiel eine Klassifizierung durch den ersten Prozessor 124 oder eine Übertragung des ersten Klassifizierungsergebnisses mit der ersten Übertragungseinrichtung 126 an die zentrale Auswertungseinrichtung 150 initiiert. Wird von dem ersten akustischen Sensor 122 allerdings ein erster Pegel größer als der untere Grenzwert gemessen, so kann die Vorrichtung 100 darauf zurückschließen, dass das zu dem ersten Pegel gehörige erste Audiosignal 142 einem Schallereignis 140 zugehörig ist, das eine Tätigkeit, einen Prozess oder eine Phase in dem Überwachungsbereich 110 beschreibt. Somit kann von dem ersten akustischen Sensor 122 initialisiert werden, dass das erste detektierte Audiosignal 142 von dem ersten Prozessor 124 klassifiziert wird und das somit erhaltene erste Klassifizierungsergebnis von der ersten Übertragungseinrichtung 126 an die zentrale Auswertungseinrichtung 150 übertragen wird. Hierdurch kann beispielsweise vermieden werden, dass der erste Prozessor 124 ein erstes Audiosignal 142 ohne Informationsgehalt versucht zu klassifizieren und möglicherweise ein erstes Klassifizierungsergebnis erhält, obwohl in dem ersten Audiosignal 142 kein Informationsgehalt vorhanden ist. Somit wird mit diesem Merkmal gewährleistet, dass eine Fehlerrate des ersten Prozessors 124 oder der zentralen Auswertungseinrichtung 150 reduziert wird, und somit die Genauigkeit der Vorrichtung zur Überwachung des Überwachungsbereichs 110 gesteigert werden kann.

Gemäß einem Ausführungsbeispiel kann das erste Audiosignal 142 detektiert von dem ersten akustischen Sensor 122, eine Überlagerung von zumindest zwei Schallereignissen (z. B. dem Schallereignis 140 und dem Schallereignis 140a) sein. Der erste Prozessor 124 kann ausgebildet sein, um einen Quellentrennungsalgorithmus auf das erste Audiosignal 142, 142a anzuwenden, um die zumindest zwei Schallereignisse zu klassifizieren oder um ein erstes Quellensignal und ein zweites Quellensignal zu erhalten, die die zumindest zwei Schallereignisse darstellen, um das erste Quellensignal und das zweite Quellensignal zu klassifizieren.

Gemäß einem Beispiel kann der erste Prozessor 124 ausgebildet sein, um das erste Audiosignal 142, 142a, 142b, detektiert von dem ersten akustischen Sensor 122, in einer Zeit-Frequenz-Darstellung das erste Audiosignal 142, 142a, 142b zu klassifizieren, um ein erstes Klassifizierungsergebnis zu erhalten. Da unterschiedliche Schallereignisse 140, 140a, 140b auch voneinander unterschiedliche Zeit-Frequenz-Darstellungen aufweisen können, kann mit der Zeit-Frequenz-Darstellung beispielsweise eine Klassifizierung durch den ersten Prozessor 124 vereinfacht werden, da nur noch die Zeit-Frequenz-Darstellung von dem ersten Prozessor 124 analysiert werden sollte, und nicht mehr das komplette erste Audiosignal, das zum Beispiel auch Überlagerungen von mehreren Schallereignissen darstellen kann. Mittels der Umwandlung des ersten Audiosignals 142, 142a, 142b durch den ersten Prozessor 124 in die Zeit-Frequenz-Darstellung kann die Klassifizierung innerhalb des ersten Prozessors oder mittels des ersten Prozessors 124 beschleunigt werden, wodurch beispielsweise die Vorrichtung 100 nach kürzester Zeit bereits eine Überwachungsausgabe für den Überwachungsbereich 110 erzeugen kann.

Gemäß einem Ausführungsbeispiel kann die erste Übertragungseinrichtung 126 ausgebildet sein, um das erste Klassifizierungsergebnis mit ersten örtlichen oder zeitlichen Informationen an die zentrale Auswertungseinrichtung 150 zu übertragen, wobei die zentrale Auswertungseinrichtung 150 ausgebildet sein kann, um das erste Klassifizierungsergebnis in Verbindung mit den ersten örtlichen und zeitlichen Informationen als Überwachungsausgabe 152 für den Überwachungsbereich 110 zu erzeugen. Somit kann das erste Klassifizierungsergebnis beispielsweise mit örtlichen Informationen, wie zum Beispiel der Quelle 140, 140a, 140b des ersten Audiosignals einem Bereich, in dem sich die Quelle 140, 140a, 140b befindet, der ersten Stelle, an der das erste Sensorsystem 120 anbringbar ist oder eine Sensor-ID, die dem ersten Sensorsystem 120 zugeordnet werden kann, und zeitlichen Informationen, wie z. B. ein Zeitstempel für einen Zeitpunkt, an dem der erste akustische Sensor 122 das erste Audiosignal 142 detektiert hat oder für den Zeitpunkt, an dem die erste Übertragungseinrichtung 126 das erste Klassifizierungsergebnis an die zentrale Auswertungseinrichtung 150 übertragen hat, verknüpft werden. Die Überwachungsausgabe 152 kann somit angeben, wann und wo das erste Klassifizierungsergebnis in dem Überwachungsbereich 110 aufgetreten ist. Somit ist die Vorrichtung 100 beispielsweise ausgelegt, um den Überwachungsbereich 110 zeitgenau und örtlich genau zu überwachen.

Gemäß einem Ausführungsbeispiel kann die zentrale Auswertungseinrichtung 150 einen Speicher 154 zum Speichern eines vorgegebenen Prozess-Ablaufplans, der eine Folge von Tätigkeiten in dem Überwachungsbereich 110 aufweist, aufweisen. Der vorgegebene Prozess-Ablaufplan kann beispielsweise von dem Nutzer der Vorrichtung 100 individuell vorgegeben werden und in dem Speicher 154 gespeichert werden. Dabei kann der vorgegebene Prozess-Ablaufplan definieren, welche Ereignisse in einem vorgegebenen Zeitraum in dem Überwachungsbereich 110 erfolgen sollen und somit beispielsweise von dem ersten Überwachungssystem 120 oder dem zweiten Sensorsystem 130 detektiert werden sollen. Die zentrale Auswertungseinrichtung 150 kann zudem einen Prozessor 156 zum Anordnen des ersten Klassifizierungsergebnisses und des zweiten Klassifizierungsergebnisses in einer Ordnung, die durch räumliche oder zeitliche Informationen über das erste Sensorsystem 120 oder das zweite Sensorsystem 130 definiert ist, aufweisen. Dabei können das erste Klassifizierungsergebnis und das zweite Klassifizierungsergebnis auf die Tätigkeiten (Aktionen, Ereignisse, Prozesse, Phasen) in dem Überwachungsbereich 110 hinweisen. Die zentrale Auswertungseinrichtung 150 ist zum Beispiel ausgebildet, um den vorgegebenen Prozess-Ablaufplan mit dem angeordneten ersten und zweiten Klassifizierungsergebnis (z. B. der Ordnung) zu vergleichen und eine Überwachungsausgabe 152 in Abhängigkeit zu einem Ergebnis des Vergleichs zu erzeugen. Durch dieses Merkmal kann die Vorrichtung 100 beispielsweise den Überwachungsbereich 110 dahingehend überwachen, ob ein vorgegebener Prozess-Ablaufplan eingehalten wird. So kann die zentrale Auswertungseinrichtung 150 zum Beispiel in der Überwachungsausgabe 152 angeben, inwiefern die Ordnung bzw. die angeordneten ersten und zweiten Klassifizierungsergebnisse von dem vorgegebenen Prozess-Ablaufplan abweichen.

Gemäß einem Ausführungsbeispiel kann die Überwachungsausgabe 152 einen Unterschied zwischen dem vorgegebenen Prozess-Ablaufplan und dem angeordneten ersten und zweiten Klassifizierungsergebnis anzeigen.

Gemäß einem Ausführungsbeispiel kann das erste Sensorsystem 120 ausgebildet sein, um mit dem ersten akustischen Sensor 122, 132 durchgehend das erste Audiosignal 142, 142a, 142b, 144, 144a, 144b zu detektieren, um das erste Audiosignal 142, 142a, 142b, 144, 144a, 144b in dem ersten Prozessor 124, 134 innerhalb eines ersten maximalen Zeitraums zu klassifizieren, wobei der erste maximale Zeitraum kürzer als fünf Sekunden ist (der erste maximale Zeitraum kann auch kürzer als drei Minuten, zwei Minute, eine Minute oder eine halbe Minute sein), und wobei die erste Übertragungseinrichtung 126, 136 ausgebildet sein kann, um das erste Klassifizierungsergebnis (z. B. das erste Klassifizierungsergebnis und das zweite Klassifizierungsergebnis) innerhalb eines zweiten maximalen Zeitraums an die zentrale Auswertungseinrichtung 150 zu übertragen, wobei der zweite maximale Zeitraum kürzer als fünf Sekunden ist (der zweite maximale Zeitraum kann auch kürzer als drei Minuten, zwei Minuten, eine Minute oder eine halbe Minute sein). Somit kann das erste Sensorsystem 120 das Audiosignal 142, 142a, 142b, 144, 144a, 144b sehr schnell detektieren, klassifizieren und übertragen, wodurch die Vorrichtung 100 beispielsweise den Überwachungsbereich 110 in Echtzeit akustisch überwachen kann.

Gemäß einem Ausführungsbeispiel kann das erste Sensorsystem 120 ausgebildet sein, um das erste Klassifizierungsergebnis zu einem ersten Zeitpunkt und zu einem zweiten Zeitpunkt mittels des ersten Prozessors 124 zu erhalten und mittels der ersten Übertragungseinrichtung 126 an die zentrale Auswertungseinrichtung 150 zu übertragen, wobei die zentrale Auswertungseinrichtung 150 ausgebildet sein kann, um das erste Klassifikationsergebnis des ersten Zeitpunkts und das erste Klassifikationsergebnis des zweiten Zeitpunkts, in Abhängigkeit des ersten Zeitpunkts oder des zweiten Zeitpunkts zu ordnen und anzugeben. Angeben kann hier beispielsweise verstanden werden als die Überwachungsausgabe für den Überwachungsbereich zu erzeugen.

Gemäß einem Ausführungsbeispiel kann die erste Übertragungseinrichtung 126 ausgebildet sein, um an die zentrale Auswertungseinrichtung 150 eine Identifikation des ersten Sensorsystems 120 mit dem ersten Klassifizierungsergebnis zu übertragen. Die zweite Übertragungseinrichtung 136 kann ausgebildet sein, um an die zentrale Auswertungseinrichtung 150 eine Identifikation des zweiten Sensorsystems 130 mit dem zweiten Klassifizierungsergebnis zu übertragen. Die zentrale Auswertungseinrichtung 150 kann einen Speicher 154 aufweisen, wobei der Speicher eine Zuordnung der Identifikation des ersten Sensorsystems 120 mit der ersten Stelle und der Identifikation des zweiten Sensorsystems mit der zweiten Stelle aufweist. Die zentrale Auswertungseinrichtung 150 kann ausgelegt sein, um basierend auf der Identifikation des ersten Sensorsystems aus dem Speicher 154 die erste Stelle zu ermitteln und basierend auf der Identifikation des zweiten Sensorsystems aus dem Speicher 154 die zweite Stelle zu ermitteln und um basierend auf der ersten Stelle, der zweiten Stelle, dem ersten Klassifizierungsergebnis oder dem zweiten Klassifizierungsergebnis einen ersten Quellenbereich des ersten Audiosignals 142 und einen zweiten Quellenbereich des zweiten Audiosignals 144 räumlich in dem Überwachungsbereich zu lokalisieren.

Gemäß einem Ausführungsbeispiel kann die erste Übertragungseinrichtung 126 ausgebildet sein, um nur das erste Klassifikationsergebnis oder ein verarbeitetes erstes Audiosignal 142 an die zentrale Auswertungseinrichtung 150 zu übertragen und die zweite Übertragungseinrichtung 136 kann ausgebildet sein, um nur das zweite Klassifikationsergebnis oder ein verarbeitetes zweites Audiosignal 144, 144a, 144b an die zentrale Auswertungseinrichtung 150 zu übertragen. Ein verarbeitetes Audiosignal kann zum Beispiel ein Audiosignal sein, das verzerrt wurde, damit beispielsweise keine Sprache mehr verständlich ist, aber das verarbeitete Audiosignal beispielsweise von der zentralen Auswertungseinrichtung 150 klassifiziert werden kann und trotz der Verzerrung noch erkennt, welche Tätigkeiten, Prozesse, Ereignisse, Phasen in dem Überwachungsbereich 110 aufgetreten sind. Ein verarbeitetes Audiosignal kann aber auch ein Signal definieren, aus dem beispielsweise Sprachformanten herausgefiltert worden sind, wodurch ebenfalls keine sprachlich verständlichen Audiosignale an die zentrale Auswertungseinrichtung 150 übertragen werden.

Die erste Übertragungseinrichtung 126 ist ausgelegt, um nur dann ein erstes Signal an die zentrale Auswertungseinrichtung zu übertragen, wenn das erste Klassifizierungsergebnis mit einem ersten vorbestimmten Klassifizierungsergebnis übereinstimmt. Genauso ist die zweite Übertragungseinrichtung 136 ausgelegt, um nur dann ein zweites Signal an die zentrale Auswertungseinrichtung 150 zu übertragen, wenn das zweite Klassifizierungsergebnis mit einem zweiten Klassifizierungsergebnis übereinstimmt. Bei dem ersten Signal oder dem zweiten Signal kann es sich beispielsweise um eine logische 1, ein Ping, oder ein charakteristisches Signal handeln, das anzeigt, dass das erste Klassifizierungsergebnis mit dem ersten vorbestimmten Klassifizierungsergebnis bzw. das zweite Klassifizierungsergebnis mit dem zweiten vorbestimmten Klassifizierungsergebnis übereinstimmt. Die zentrale Auswertungseinrichtung 150 ist ausgelegt, um zu zählen, wie oft pro Zeitdauer das erste Sensorsystem 120 das erste vorbestimmte Klassifizierungsergebnis ermittelt hat (hierbei wird beispielsweise gezählt wie oft das erste Signal an die zentrale Auswertungseinrichtung 150 übertragen wird) oder wie oft pro Zeitdauer das zweite Sensorsystem 130 das zweite vorbestimmte Klassifizierungsergebnis ermittelt hat (hier wird beispielsweise von der zentralen Auswertungseinrichtung 150 gezählt, wie oft das zweite Signal an die zentrale Auswertungseinrichtung 150 übertragen wurde).

Gemäß einem Ausführungsbeispiel kann das erste vorbestimmte Klassifikationsergebnis und das zweite vorbestimmte Klassifikationsergebnis ein Klassifikationsergebnis für ein Fahrzeug (Auto, Bus, LKW, Zug (Unterscheidungsmöglichkeit Güterzug/Personenzug), Flugzeug, Fahrrad, etc.) sein. Der Überwachungsbereich 110 kann eine Straße, ein Straßennetz oder ein Schienennetz sein. Somit kann das erste Sensorsystem 120 oder das zweite Sensorsystem 130 beispielsweise an Straßen oder Schienen anbringbar sein. Die zentrale Auswertungseinrichtung 150 kann ausgebildet sein, um eine Auslastung des Überwachungsbereichs pro Stelle oder pro Gruppe an Stellen zu liefern. So kann beispielsweise mit der Vorrichtung 100 ein Straßennetz akustisch überwacht werden und die zentrale Auswertungseinrichtung 150 ausgebildet sein, um zu zählen, wie oft das erste Signal oder das zweite Signal an die zentrale Auswertungseinrichtung 150 übertragen wird, um festzustellen, wie viele Autos, Busse oder LKWs an dem ersten Sensorsystem oder dem zweiten Sensorsystem vorbeifahren. Hierbei kann beispielsweise das erste Sensorsystem immer ein erstes Signal senden, wenn ein Auto vorbeifährt (erstes vorbestimmtes Klassifikationsergebnis ist ein Auto) oder das zweite Sensorsystem immer dann ein zweites Signal an die zentrale Auswertungseinrichtung 150 übertragen, wenn an dem zweiten Sensorsystem 130 ein LKW vorbeifährt (das zweite vorbestimmte Klassifikationsergebnis ist in diesem Fall beispielsweise ein LKW). Somit kann beispielsweise mit der Vorrichtung 100 eine Verkehrszählung durchgeführt werden oder eine Auslastung des Straßennetzes der Straße überwacht werden. Bei Flugzeugen kann zum Beispiel mit der Vorrichtung 100das Straßennetz auf einem Flughafen überwacht werden, auf dem beispielsweise sowohl Flugzeuge als auch Busse und andere Transportfahrzeuge unterwegs sind.

Gemäß einem Beispiel kann die Vorrichtung 100 auf Baustellen eingesetzt werden. Vielfältige Ursachen können zu Verzögerungen in geplanten Abläufen auf Baustellen führen (Abhängigkeiten zwischen Bauphasen, Lieferengpässe und - Verzögerungen, etc.). Bauverzögerungen können zu hohen finanziellen Schäden führen (z. B. Schadensersatzforderungen, etc.). Um dies zu vermeiden, kann die Vorrichtung 100 auf Baustellen eingesetzt werden, um geplante Abläufe wie zum Beispiel ein vorbestimmter Prozess-Ablaufplan zu überprüfen und mögliche Verzögerungen bzw. Ursachen für die Verzögerung anhand der Vorrichtung 100 zu erfassen, indem beispielsweise die zentrale Auswertungseinrichtung 150 ausgelegt ist, um erfasste Abläufe mit dem vorgegebenen Prozess-Ablaufplan zu vergleichen und somit Abweichungen feststellen zu können.

Bei großen Baustellen laufen verschiedene Bauphasen oft räumlich und zeitlich parallel. Dies kann eine technische Herausforderung darstellen, da mehrere Geräusche von oft gleichzeitig durchgeführten Bautätigkeiten sich überlagern können. Durch die Vorrichtung 100 kann beispielsweise in einem Prozessor 124, 134 des ersten Sensorsystems oder des zweiten Sensorsystems 130 ein Quellentrennungsalgorithmus auf das aufgenommene Audiosignal angewendet werden, um Überlagerungen aufzutrennen und einzelnen Geräuschquellen zuordnen zu können und somit mittels dem Prozessor 124, 126 die einzelnen Geräuschquellen innerhalb des Audiosignals einzeln zu klassifizieren und somit mehrere parallel ablaufende Tätigkeiten, Prozesse, Phasen auf einer Baustelle gleichzeitig zu erfassen und zu überwachen. Die Vorrichtung 100 ermöglicht somit eine zeitgenaue Prozessüberwachung der Bauphasen und dazugehörige Tätigkeiten mit nur geringem Aufwand und einfacher logistischer Realisierbarkeit.

Gemäß einem Beispiel umfasst die Vorrichtung 100 ein verteiltes Sensorsystem, zum Beispiel bestehend aus einem ersten Sensorsystem 120 an einer ersten Stelle und dem zweiten Sensorsystem 130 an der zweiten Stelle, zur kontinuierlichen Audioaufnahme an einer/verschiedenen Position(en) innerhalb einer Baustelle. Hierbei ist die Vorrichtung 100 nicht auf das erste Sensorsystem 120 und das zweite Sensorsystem 130 beschränkt, sondern kann weitere Sensorsysteme, wie zum Beispiel ein drittes Sensorsystem, ein viertes Sensorsystem, ein fünftes Sensorsystem, ein sechstes Sensorsystem und ein achtes Sensorsystem mit den gleichen Merkmalen wie das erste Sensorsystem 120 oder das zweite Sensorsystem 130 aufweisen.

In anderen Worten kann gemäß einem Beispiel eine Echtzeit-Analyse der Audiodaten (z. B. der Audiosignale 142, 142a, 142b, 144, 144a, 144b) auf den Sensoren (z. B. dem ersten Sensorsystem 120 oder dem zweiten Sensorsystem 130) und eine Übertragung der Analyseergebnisse (z. B. des Klassifikationsergebnisses oder des zweiten Klassifikationsergebnisses) per Mobilfunk an einen zentralen Server (z. B. der zentralen Auswertungseinrichtung 150) zur übergreifenden Auswertung (z. B. Langzeit-Auswertung) durchgeführt werden.

Gemäß einem Beispiel kann an jedem Sensor (z. B. dem ersten Sensorsystem 120 und dem zweiten Sensorsystem 130) eine Umwandlung des Audiosignals 142, 142a, 142b, 144, 144a, 144b in eine Zeit-Frequenz-Darstellung (z. B. mittels Kurzzeit-Fourier-Transformation) erfolgen. Optional kann in dem ersten Sensorsystem 120 oder dem zweiten Sensorsystem 130 eine automatische Klassifikation mehrerer Klangereignisse/Schallereignisse 140, welche bestimmten Bauphasen/-tätigkeiten (z. B. Hammerschlag, Akkubohrer, Krankettenabladen) zugeordnet werden können. Diese automatische Klassifikation kann beispielsweise von dem ersten Prozessor 124 oder dem zweiten Prozessor 134 durchgeführt werden. Gemäß einem Ausführungsbeispiel kann die automatische Klassifikation über eine Zeit-Frequenz-Darstellung (z. B. Spektrogramm) kombiniert mit einem automatischen Klassifikationsalgorithmus (z. B. neuronalen Netzwerken) durchgeführt werden, wobei über eine Zeit-Frequenz-Darstellung kombiniert mit einem automatischen Klassifikationsalgorithmus charakteristische Klangmuster gelernt oder erkannt werden können. Dies erlaubt auch die gleichzeitige Erkennung mehrerer aktiver Tätigkeiten, die sich entsprechend klanglich überlagern.

Gemäß einem Beispiel können anhand der erkannten Klangereignisse/Schallereignisse 140, 140a, 140b aktive Bauphasen (an verschiedenen Positionen innerhalb der Baustelle (z. B. dem Überwachungsbereich 110)) abgeleitet und zeitlich dokumentiert werden. So kann beispielsweise durch den ersten Prozessor 124 oder den zweiten Prozessor 134 einem ersten Audiosignal bzw. einem zweiten Audiosignal ein erstes Klassifizierungsergebnis bzw. ein zweites Klassifizierungsergebnis zugeordnet werden, das eine aktive Bauphase anzeigen kann und zusätzlich kann beispielsweise die erste Übertragungseinrichtung 126 oder die zweite Übertragungseinrichtung 136 mit dem ersten Klassifizierungsergebnis bzw. dem zweiten Klassifizierungsergebnis einen Zeitstempel an die zentrale Auswertungseinrichtung 150 übertragen, damit eine zeitliche Dokumentation realisiert wird. In dem Speicher 154 der zentralen Auswertungseinrichtung 150 kann beispielsweise ein vorgegebener Prozess-Ablaufplan abgespeichert werden, wobei der vorgegebene Prozess-Ablaufplan zum Beispiel durch Einbringung von Expertenwissen (z. B. dem Nutzer der Vorrichtung 100) eine Zuordnung zwischen Bauphasen und dazugehörigen Tätigkeiten bzw. Positionen innerhalb der Baustelle (dem Überwachungsbereich 110) aufweisen kann. Somit können in der zentralen Auswertungseinrichtung 150 erkannte Tätigkeiten durch das erste Sensorsystem 120 bzw. das zweite Sensorsystem 130 mit dem vorgegebenen Prozess-Ablaufplan verglichen werden. Dies ermöglicht eine zeitgenaue Verfolgung des Bauverlaufes. Durch den automatischen Abgleich mit dem Bauplan (z. B. dem vorgegebenen Prozess-Ablaufplan) können so mögliche Verzögerungen räumlich und zeitlich innerhalb des Überwachungsbereichs 110 mit der Vorrichtung 100 identifiziert werden.

Im Folgenden werden weitere bevorzugte Ausführungsbeispiele insbesondere zusätzlich oder alternativ zur vorstehenden Darstellung beschrieben.

Gemäß einem Beispiel kann das erste Sensorsystem 120 oder das zweite Sensorsystem 130 ausgebildet sein, um zusätzliche Messungen von Schallpegeln (z. B. dem ersten Pegel oder dem zweiten Pegel) an den einzelnen Sensoren (z. B. dem ersten akustischen Sensor 122 oder dem zweiten akustischen Sensor 132) durchzuführen. Hierbei ist beispielsweise eine zeitliche Filterung sinnvoll, so dass diese Pegel nur während aktiver Tätigkeiten gespeichert/analysiert werden. So wird beispielsweise der erste Prozessor 124 oder der zweite Prozessor 134 von einem Schlafmodus in einen Betriebsmodus gesetzt, wenn der erste akustische Sensor 122 oder der zweite akustische Sensor 132 eine aktive Tätigkeit (z. B. einen Pegel, der einen unteren Grenzwert überschreitet) detektiert,

Gemäß einem Beispiel kann mithilfe der zeitlich gemessenen Schallpegelwerte eine genaue räumliche Lokalisierung der Tätigkeit auf der Baustelle (z. B. dem Überwachungsbereich 110) erfolgen, wenn das gleiche Klangereignis (z. B. eine Übereinstimmung des ersten Klassifizierungsergebnisses mit dem zweiten Klassifizierungsergebnis) an mehreren räumlich benachbarten Sensoren (z. B. dem ersten Sensorsystem 120 und dem zweiten Sensorsystem 130) als aktiv erkannt werden. Optional kann die genaue räumliche Lokalisierung der Tätigkeit in dem Überwachungsbereich 110 zum Beispiel durch Laufzeit-/Korrelationsanalysen erfolgen. Diese räumliche Lokalisierung kann beispielsweise von der zentralen Auswertungseinrichtung 150 durchgeführt werden.

So können gemäß einem Beispiel über die komplette räumliche Ausdehnung eine Baustelle (z. B. dem gesamten Überwachungsbereich 110) verschiedene Tätigkeiten zeitgenau und räumlich lokalisiert erkannt werden.

Im Folgenden werden noch weitere bevorzugte Ausführungsbeispiele und Beispiele insbesondere zusätzlich oder alternativ zur vorstehenden Darstellung ausgeführt.

Gemäß einem Beispiel kann durch eine kontinuierliche und räumlich verteilte Messung von Schallpegeln (z. b. durch den ersten akustischen Sensor 122 oder den zweiten akustischen Sensor 132) systematisch das Einhalten von (gesetzlichen) Lärmauflagen überwacht und dokumentiert werden. Bei Überschreitung von Grenzwerten (z. B. dem unteren Grenzwert) kann durch die Analyseergebnisse (z. B. der Überwachungsausgabe 152) gezielt auf Ursachen geschlossen werden, um diese zu beheben. So kann beispielsweise mit der Vorrichtung 100 innerhalb des Überwachungsbereichs 110 festgestellt werden, an welchen Stellen eine besonders hohe Lärmbelastung auftritt (z. B. ein Pegel eines Audiosignals überschreitet den unteren Grenzwert) und welche Ursache dieser erhöhten Lautstärke zuzuordnen ist.

Im Folgenden werden Wirkungen und Vorteile der hierin beschriebenen Ausführungsbeispiele und Beispiele (z. B. der vorstehend beschriebenen Ausführungsbeispiele und der nachfolgend beschriebenen Beispiele) ausgeführt.

Gemäß einem Beispiel kann die Vorrichtung 100 ausgebildet sein, um zeitgenaue und räumliche Prozessüberwachung von Bauphasen und dazugehörigen Tätigkeiten auf Baustellen (z. B. dem Überwachungsbereich 110) beliebiger Größe durchzuführen. Je nach Größe kann beispielsweise die verwendete Anzahl an Sensorsystemen variieren. So sollten beispielsweise bei einem größeren Überwachungsbereich 110 auch mehr Sensorsysteme in dem Überwachungsbereich angebracht werden, als bei einem kleineren Überwachungsbereich.

Die Vorrichtung 100 bietet eine kostengünstige technische Lösung durch geringe Kosten der verteilten Sensorsysteme (z. B. des ersten Sensorsystems 120 oder dem zweiten Sensorsystem 130) mit beispielsweise einfacherer Mikrofonierung und Serverkomponente (z. B. dem ersten Prozessor 124 oder dem zweiten Prozessor 134) für Analyseaufgaben.

Gemäß einem Beispiel kann der erste Prozessor 124 oder der zweite Prozessor 134 individuell an den Überwachungsbereich 110 bzw. an die Anforderungen des Nutzers für den Überwachungsbereich 110 individuell angepasst werden. So verfügt der erste Prozessor 124 oder der zweite Prozessor 134 über eine leichte Adaptivität auf neue Klassen/lokale akustische Gegebenheiten (Umweltgeräusche etc.)/Klassifikationsergebnisse durch Nachtrainieren der Klassifikationsmodelle. Somit kann die Vorrichtung 100 und ein Verfahren zur akustischen Prozessüberwachung von Baustellen oder zur akustischen Überwachung von anderen Szenarien eingesetzt werden.

Gemäß einem Beispiel kann durch Klangerkennung auf den Sensorknoten (z. B. in dem ersten Prozessor 124 oder dem zweiten Prozessor 134) verhindert werden, dass reale Audioaufnahme übertragen/nachhaltig gespeichert werden, was Datenschutzanforderungen leichter erfüllen lässt (z. B. Vermeidung möglicher Spracherkennung(.

Gemäß einem Beispiel kann die Vorrichtung 100 auf einer Baustelle eingesetzt werden. Hierbei kann ein mögliches Anwendungsszenario die Klassifikation am Sensor vorbeifahrender Baustellenfahrzeuge um die Logistik der Baustofflieferung genau zu überwachen sein. Hierfür kann beispielsweise in dem ersten Prozessor 124 oder dem zweiten Prozessor 134 als vorgegebenes Klassifizierungsergebnis ein Materialtransporter abgespeichert sein. Erkennt der erste Prozessor 124 oder der zweite Prozessor 134 beispielsweise indem durch den ersten akustischen Sensor 122 bzw. dem zweiten akustischen Sensor 132 aufgenommenen Audiosignal (z. b. im ersten Audiosignal oder dem zweiten Audiosignal) das vorgegebene Klassifizierungsergebnis, so kann die erste Übertragungseinrichtung 126 oder die zweite Übertragungseinrichtung 136 eine logische 1, einen Ping oder ein charakteristisches Signal an die zentrale Auswertungseinrichtung 150 senden, die daraufhin dieses empfangene Signal für den Überwachungsbereich 110 zählt. Ein weiteres mögliches Anwendungsszenario ist die Überwachung von Arbeitszeiten stationärer Maschinen auf der Baustelle (z. b. die Betonpumpe) oder in Fabriken (z. B. Roboter) zur Analyse der Materiallogistik/Ausrüstungsgrad der Maschinen.

Gemäß einem Beispiel der Vorrichtung 100 können mit der Vorrichtung 100 nicht nur Baustellen wie oben beschrieben akustisch überwacht werden, sondern auch andere Szenarien, wie z. B. eine Verkehrszählung oder ein Monitoring oder eine Zustandsüberwachung von Maschinen auf Baustellen oder anderen Stellen durchgeführt werden.

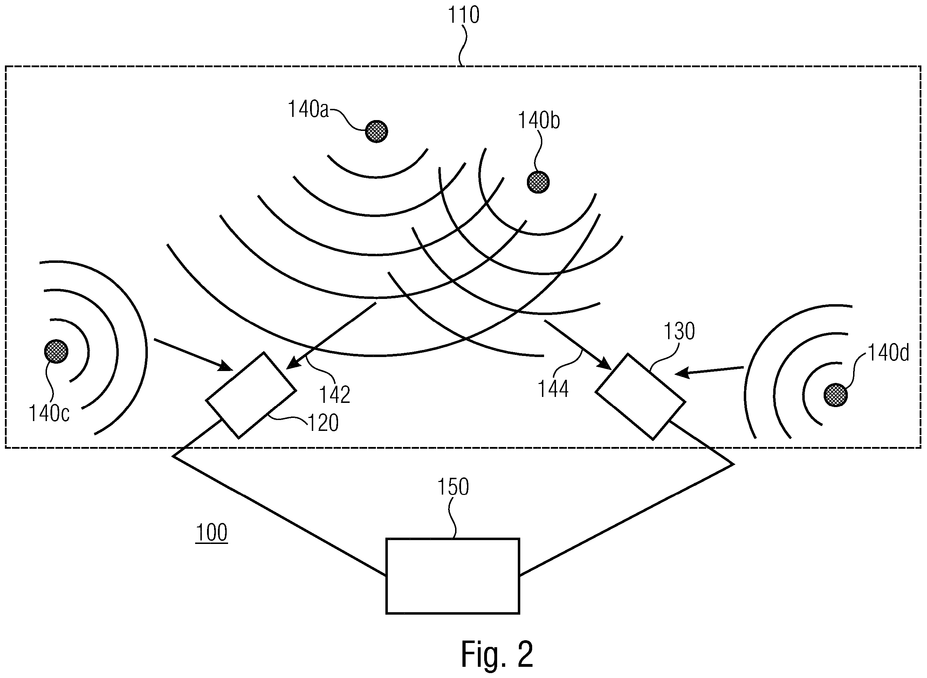

Fig. 2 zeigt eine schematische Darstellung der Vorrichtung 100 gemäß einem Ausführungsbeispiel der vorliegenden Erfindung. Die Vorrichtung 100 kann dieselben Merkmale und Funktionalitäten wie die Vorrichtung 100 aus Fig. 1 aufweisen. So weist die Vorrichtung 100 aus Fig. 2 das erste Sensorsystem 120, das zweite Sensorsystem 130 und die zentrale Auswertungseinrichtung 150 auf. Mit der Vorrichtung 100 kann der Überwachungsbereich 110 akustisch überwacht werden.

Gemäß einem Beispiel kann in dem Überwachungsbereich 110 eine erste Quelle 140a eines ersten Schallereignisses und eine zweite Quelle 140b eines zweiten Schallereignisses angeordnet sein. Das akustische Geräusch verursacht durch die Quelle 14a sowie durch die zweite Quelle 140b kann sich gegenseitig überlagern, wodurch das erste Sensorsystem 120 ein erstes überlagertes Audiosignal 142 detektieren kann und das zweite Sensorsystem 130 ein zweites überlagertes Audiosignal 144 detektieren kann. In anderen Worten ist das erste Audiosignal 142 oder das zweite Audiosignal 144 beispielsweise eine Überlagerung von zumindest zwei Schallereignissen (z. B. einem ersten Schallereignis verursacht durch die erste Quelle 140a und ein zweites Schallereignis verursacht durch die zweite Quelle 140b). Das erste Sensorsystem 120 weist einen ersten Prozessor auf und das zweite Sensorsystem 130 einen zweiten Prozessor. Dabei kann der erste Prozessor ausgebildet sein, um einen Quellentrennungsalgorithmus auf das erste Audiosignal anzuwenden bzw. der zweite Prozessor kann ausgebildet sein, um ein Quellentrennungsalgorithmus auf das zweite Audiosignal 144 anzuwenden, um die zumindest zwei Schallereignisse zu klassifizieren oder um ein erstes Quellensignal und ein zweites Quellensignal zu erhalten, die die zumindest zwei Schallereignisse darstellen, um das erste Quellensignal und das zweite Quellensignal zu klassifizieren.

Der Quellentrennungsalgorithmus kann beispielsweise spezifische Geräuschsignale, die zum Beispiel in dem Überwachungsbereich 110 auftreten können, aufweisen und diese charakteristischen Geräuschsignale mit dem von dem ersten Sensorsystem 120 aufgenommenen ersten Audiosignal 142 oder dem von dem zweiten Sensorsystem 130 aufgenommenen zweiten Audiosignals 144 abgleichen und dadurch dem ersten Audiosignal 142 oder dem zweiten Audiosignal 144 beispielsweise zwei charakteristische Geräuschsignale zuzuordnen, wodurch der Quellentrennungsalgorithmus genutzt werden kann, um direkt aus dem ersten Audiosignal 142 oder dem zweiten Audiosignal 144 ein erstes Klassifizierungsergebnis bzw. ein zweites Klassifizierungsergebnis, mit zum Beispiel zwei Klassifizierungen (z. B. der ersten Quelle 140a und der zweiten Quelle 140) zu erhalten. Alternativ kann der Quellentrennungsalgorithmus das detektierte Audiosignal 142, 144 auch zunächst in ein erstes Quellensignal und ein zweites Quellensignal, die mit der ersten Quelle 140a bzw. der zweiten Quelle 140b korrespondieren, auftrennen. Dadurch kann der Prozessor (z. B. der erste Prozessor in dem ersten Sensorsystem 120 und der zweite Prozessor in dem zweiten Sensorsystem 130) in einem weiteren Schritt das erste Quellensignal klassifizieren und das zweite Quellensignal klassifizieren und somit ein erstes Klassifikationsergebnis bzw. ein zweites Klassifikationsergebnis mit jeweils zwei Klassifikationen (des ersten Quellensignals und des zweiten Quellensignals) zu erhalten.

Gemäß einem Beispiel können in dem Überwachungsbereich 110 auch mehr als zwei Quellen für zwei Schallereignisse angeordnet sein. Gemäß Fig. 2 können beispielsweise vier Schallereignisse mit einer ersten Quelle 140a, einer zweiten Quelle 140b, einer dritten Quelle 140c und einer vierten Quelle 140d in dem Überwachungsbereich 110 angeordnet sein. Dabei kann beispielsweise das erste Sensorsystem 120 einen so gro-ßen Detektionsbereich für den akustischen Sensor in dem ersten Sensorsystem 120 aufweisen, so dass das erste Audiosignal detektiert von dem ersten akustischen Sensor eine Überlagerung von drei Schallereignissen (der ersten Quelle 140a, der zweiten Quelle 140b und der dritten Quelle 140c) detektiert wird. Genauso kann das zweite Sensorsystem 130 einen akustischen Sensor aufweisen, der einen so großen Detektionsbereich aufweist, dass der akustische Sensor eine Überlagerung von drei Schallereignissen (einer ersten Quelle 140a, einer zweiten Quelle 140b und einer vierten Quelle 140d) detektieren kann. Somit kann der Quellentrennungsalgorithmus in dem ersten Prozessor des ersten Sensorsystems 120 sowie der Quellentrennungsalgorithmus in dem zweiten Prozessor des zweiten Sensorsystems 130 dazu ausgelegt sein, um die drei Schallereignisse zu klassifizieren oder um ein erstes Quellensignal, ein zweites Quellensignal und ein Quellensignal zu erhalten, die die drei Schallereignisse darstellen, um das erste Quellensignal, das zweite Quellensignal und das dritte Quellensignal zu klassifizieren.

Gemäß einem Ausführungsbeispiel kann das erste Sensorsystem 120 bzw. das zweite Sensorsystem 130 einen ersten Pegel bzw. einen zweiten Pegel des ersten Audiosignals bzw. des zweiten Audiosignals messen, wobei die zentrale Auswertungseinrichtung 150 ausgebildet sein kann, um bei einer Übereinstimmung des ersten Klassifizierungsergebnisses mit dem zweiten Klassifizierungsergebnis, in Abhängigkeit des ersten Pegels und des zweiten Pegels eine Quelle des ersten Audiosignals und des zweiten Audiosignals, unter Verwendung von Informationen über die erste Stelle und Informationen über die zweite Stelle, räumlich in dem Überwachungsbereich zu lokalisieren. Gemäß Fig. 2 stimmt beispielsweise das erste Klassifizierungsergebnis des ersten Sensorsystems 120 mit dem zweiten Klassifizierungsergebnis des zweiten Sensorsystems 130 dahingehend überein, dass beide die erste Quelle 140a und die zweite Quelle 140b klassifiziert haben, wodurch zwei von drei Klassifikationen des ersten Klassifikationsergebnisses mit zwei von drei Klassifikationen des zweiten Klassifizierungsergebnisses miteinander übereinstimmen. Da die zentrale Auswertungseinrichtung 150 beispielsweise Informationen darüber aufweisen kann, dass das erste Sensorsystem 120 an einer ersten Stelle angebracht ist und das zweite Sensorsystem 130 an einer zweiten Stelle angebracht ist, kann die zentrale Auswertungseinrichtung 150 basierend auf den Informationen über die erste Stelle und Informationen über die zweite Stelle und den Pegelinformationen die erste Quelle 140a und die zweite Quelle 140b in dem Überwachungsbereich 110 lokalisieren.

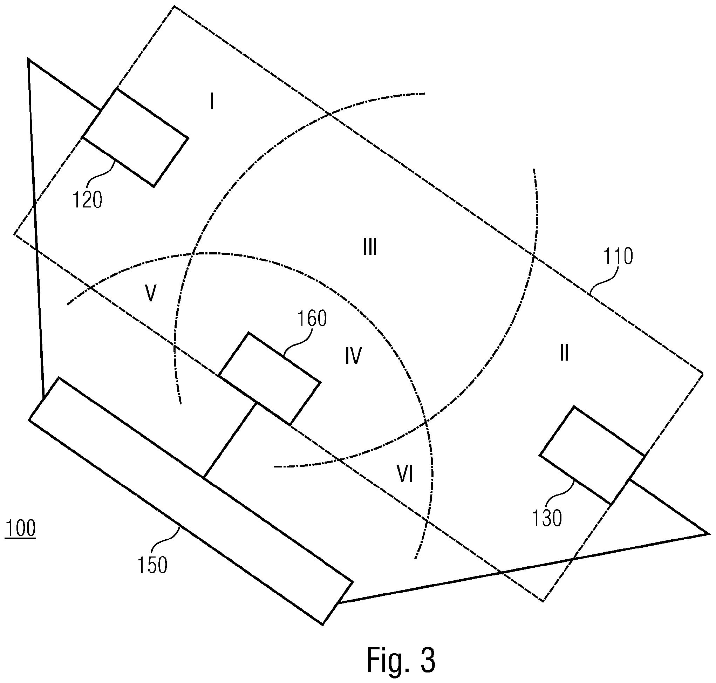

Fig. 3 zeigt eine schematische Darstellung einer Vorrichtung 100 mit einer zentralen Auswertungseinrichtung 150, einem ersten Sensorsystem 120, einem zweiten Sensorsystem 130 und einem dritten Sensorsystem 160. Dabei ist beispielsweise das erste Sensorsystem 120 an einer ersten Stelle in dem Überwachungsbereich 110 angeordnet, das zweite Sensorsystem 130 ist beispielsweise an einer zweiten Stelle in dem Überwachungsbereich 110 angeordnet und das dritte Sensorsystem 160 ist beispielsweise an einer dritten Stelle in dem Überwachungsbereich 110 angeordnet. Dabei unterscheiden sich zumindest die erste und die zweite Stelle voneinander. Gemäß einem Beispiel kann das dritte Sensorsystem 160 dieselben Merkmale und Funktionalitäten aufweisen, wie das erste Sensorsystem 120 und das zweite Sensorsystem 130.

Gemäß einem Ausführungsbeispiel kann die zentrale Auswertungseinrichtung 150 einen Speicher aufweisen, in dem abgespeichert ist, welches Sensorsystem an welcher Stelle sich im Überwachungsbereich 110 befindet. So befindet sich in dem Speicher beispielsweise eine Zuordnung einer Sender-ID des ersten Sensorsystems 120 verknüpft mit der ersten Stelle, des zweiten Sensorsystems 130 verknüpft mit der zweiten Stelle und des dritten Sensorsystems 160 verknüpft mit der dritten Stelle. Optional kann in dem Speicher der zentralen Auswertungseinrichtung 150 hinterlegt sein, welche Bereiche des Überwachungsbereichs 110 von dem ersten Sensorsystem 120, dem zweiten Sensorsystem 130 bzw. dem dritten Sensorsystem 160 überwacht werden. So kann beispielsweise das erste Sensorsystem 120 den Bereich I, III, IV und V akustisch überwachen und das zweite Sensorsystem 130 den Bereich II, III, IV und VI überwachen und das dritte Sensorsystem 160 kann beispielsweise den Bereich IV, V und VI überwachen. Wird nun beispielsweise das erste Klassifikationsergebnis des ersten Sensorsystem 120 mit einer ersten Sensor-ID an die zentrale Auswertungseinrichtung 150 gesendet und ein zweites Klassifikationsergebnis des zweiten Sensorsystems 130 mit eine zweiten Sensor-ID an die zentrale Auswertungseinrichtung 150 gesendet und ein drittes Klassifikationsergebnis mit einer dritten Sensor-ID von dem dritten Sensorsystem 160 an die zentrale Auswertungseinrichtung 150 übertragen, so können die Klassifikationsergebnisse einzelnen Bereichen innerhalb des Überwachungsbereichs 110 von der zentralen Auswertungseinrichtung 150 zugeordnet werden.

So kann beispielsweise ein Schallereignis, das nur von dem ersten Sensorsystem 120 erfasst worden ist nur in dem Bereich I des Überwachungsbereichs 110 angeordnet sein. Wird ein Schallereignis nur von dem zweiten Sensorsystem 130 detektiert, so kann das Schallereignis nur in dem Bereich II des Überwachungsbereichs 110 angeordnet sein. Wird hingegen ein Schallereignis sowohl von dem ersten Sensorsystem 120 als auch von dem zweiten Sensorsystem 130 detektiert, so kann das Schallereignis nur in dem Bereich III des Überwachungsbereichs 110 angeordnet sein. Wird ein Schallereignis von dem ersten Sensorsystem 120 und dem dritten Sensorsystem 160 erfasst, so kann dieses Schallereignis nur in dem Bereich V angeordnet sein und wird ein Schallereignis von dem zweiten Sensorsystem 130 und dem dritten Sensorsystem 160 erfasst, so muss sich dieses Schallereignis in dem Bereich VI des Überwachungsbereichs 110 befinden. Detektiert sowohl das erste Sensorsystem 120, das zweite Sensorsystem 130 und das dritte Sensorsystem 160 das Schallereignis, so muss sich das Schallereignis beispielsweise in dem Bereich IV des Überwachungsbereichs 110 befinden.

Somit ist die Vorrichtung 100 ausgelegt, um zumindest bereichsweise örtliche Informationen innerhalb des Überwachungsbereichs 110 auf Basis einer Identifikation des Sensorsystems 120, 130, 160 durchzuführen.

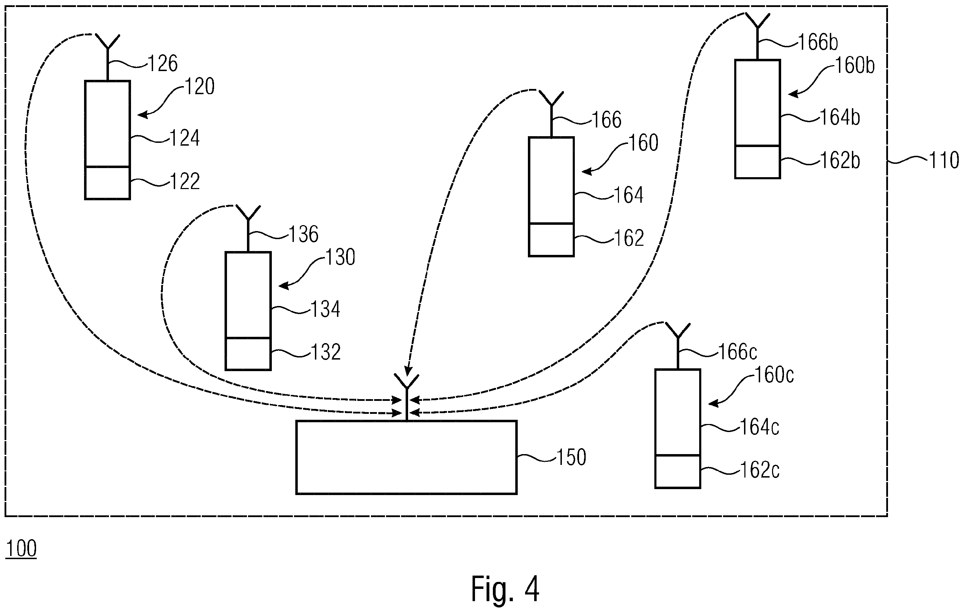

Gemäß dem Ausführungsbeispiel aus Fig. 3 weist das erste Sensorsystem 120 eine erste Übertragungseinrichtung auf, die ausgebildet sein kann, um an die zentrale Auswertungseinrichtung 150 eine Identifikation des ersten Sensorsystems 120 mit dem ersten Klassifizierungsergebnis zu übertragen und das zweite Sensorsystem 130 weist, eine zweite Übertragungseinrichtung auf, die ausgebildet sein kann, um an die zentrale Auswertungseinrichtung 150 eine Identifikation des zweiten Sensorsystems 130 mit dem zweiten Klassifizierungsergebnis zu übertragen. Die zentrale Auswertungseinrichtung 150 kann einen Speicher aufweisen, wobei der Speicher eine Zuordnung der Identifikation des ersten Sensorsystems 120 mit der ersten Stelle und der Identifikation des zweiten Sensorsystems 130 mit der zweiten Stelle aufweist. Des Weiteren kann die zentrale Auswertungseinrichtung 150 ausgelegt sein, um basierend auf der Identifikation des ersten Sensorsystems 120 aus dem Speicher die erste Stelle zu ermitteln und basierend auf der Identifikation des zweiten Sensorsystems 130 aus dem Speicher die zweite Stelle zu ermitteln und um basierend auf der ersten Stelle, der zweiten Stelle, dem ersten Klassifizierungsergebnis oder dem zweiten Klassifizierungsergebnis einen ersten Quellenbereich (z. B. den Bereich I, den Bereich II, III, IV, V oder VI) des ersten Audiosignals und einen zweiten Quellenbereich des zweiten Audiosignals räumlich in dem Überwachungsbereich 110 zu lokalisieren. Fig. 4 zeigt eine schematische Darstellung einer Vorrichtung 100 mit einer zentralen Auswertungseinrichtung 150, einem ersten Sensorsystem 120, das an einer ersten Stelle in einem Überwachungsbereich 110 anbringbar ist, einem zweiten Sensorsystem 130, das an einer zweiten Stelle des Überwachungsbereichs anbringbar ist, einem dritten Sensorsystem 160, das an einer dritten Stelle des Überwachungsbereichs 110 anbringbar ist, einem vierten Sensorsystem 160b, das an einer vierten Stelle des Überwachungsbereichs 110 anbringbar ist, und ein fünftes Sensorsystem 160c, das an einer fünften Stelle des Überwachungsbereichs 110 anbringbar ist. Dabei kann das erste Sensorsystem 120, das zweite Sensorsystem 130, das dritte Sensorsystem 160, das vierte Sensorsystem 160b und das fünfte Sensorsystem 160c dieselben Merkmale und Funktionalitäten aufweisen wie das erste Sensorsystem 120 und das zweite Sensorsystem 130 aus Fig. 1, Fig. 2 und Fig. 3 sowie wie das dritte Sensorsystem 160 aus Fig. 3.

Erfindungsgemäß weist das erste Sensorsystem 120 einen ersten akustischen Sensor 122, einen ersten Prozessor 124 und eine erste Übertragungseinrichtung 126 auf. Das zweite Sensorsystem 130 weist einen zweiten akustischen Sensor 132, einen zweiten Prozessor 134 und eine zweite Übertragungseinrichtung 136 auf. Gemäß einem Ausführungsbeispiel kann die dritte Sensoreinheit 160, die vierte Sensoreinheit 160b und die fünfte Sensoreinheit 160c einen akustischen Sensor 162, 162b, 162c, einen Prozessor 164, 164b, 164c und eine Übertragungseinheit 166, 166b, 166c aufweisen. Gemäß einem Ausführungsbeispiel kann der akustische Sensor 162, 162b, 162c die gleichen Merkmale und Funktionalitäten wie der erste akustische Sensor 122 und der zweite akustische Sensor 132 aufweisen. Gemäß einem Ausführungsbeispiel kann der Prozessor 164, 164b, 164c die gleichen Merkmale und Funktionalitäten wie der erste Prozessor 124 und der zweite Prozessor 134 aufweisen. Gemäß einem Ausführungsbeispiel kann die Übertragungseinrichtung 166, 166b, 166c die gleichen Merkmale und Funktionalitäten wie die erste Übertragungseinrichtung 126 oder die zweite Übertragungseinrichtung 136 aufweisen.

Gemäß einem Beispiel ist die Übertragungseinrichtung 166, 166b, 166c, die erste Übertragungseinrichtung 126, die zweite Übertragungseinrichtung 136 und die zentrale Auswertungseinrichtung 150 ausgebildet, um drahtlos gemäß einem Mobilfunkprotokoll miteinander zu kommunizieren. Somit wird ermöglicht, dass die Vorrichtung 100 sehr einfach in einem Überwachungsbereich anbringbar ist, da keine Kabel zwischen den einzelnen Komponenten der Vorrichtung 100 verlegt werden müssen, um eine Übertragung von beispielsweise Klassifizierungsergebnissen zu realisieren. Somit können die einzelnen Komponenten der Vorrichtung 100 unabhängig voneinander individuell an den Überwachungsbereich 110 angepasst in dem Überwachungsbereich 110 angebracht werden, wobei dabei stets eine Kommunikation bzw. Übertragung zwischen den einzelnen Komponenten der Vorrichtung 100 gewährleistet bleibt.

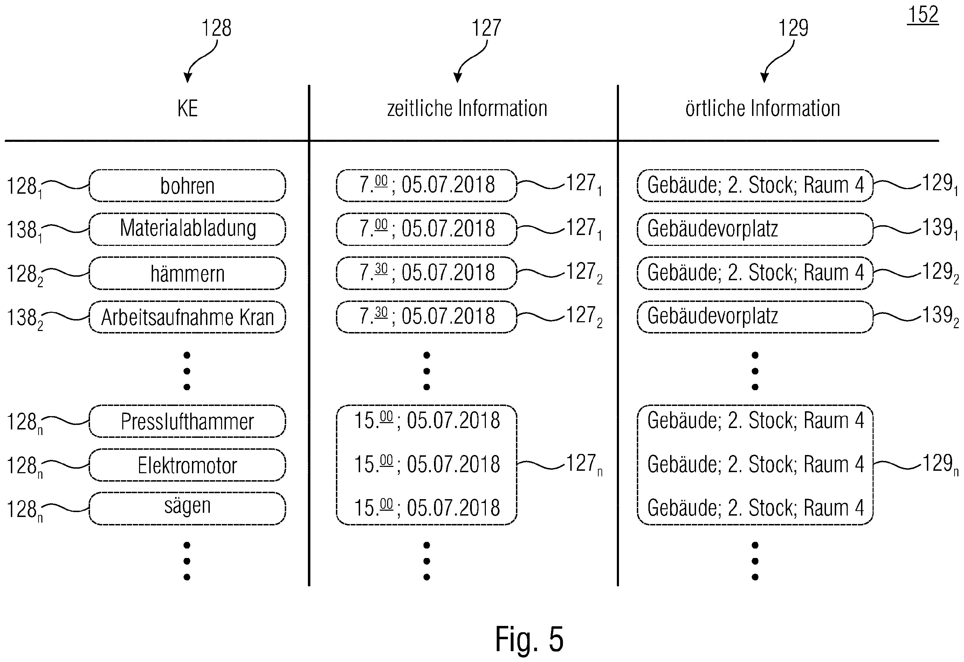

Fig. 5 zeigt eine tabellarische Darstellung einer Überwachungsausgabe 152 für einen Überwachungsbereich erzeugt durch eine Vorrichtung. Gemäß einem Beispiel kann ein erstes Sensorsystem der Vorrichtung ausgebildet sein, um ein erstes Klassifizierungsergebnis 128₁ bis 128ₙ (wobei n eine beliebige natürliche Zahl ≥ 3 sein kann) zu einem ersten Zeitpunkt 127₁, einem zweiten Zeitpunkt 127₂ und zu einem n-ten Zeitpunkt 127, (wobei zwischen dem zweiten Zeitpunkt und dem n-ten Zeitpunkt n-3 weitere Zeitpunkte auftreten können) mittels eines ersten Prozessors zu erhalten und mittels einer Übertragungseinrichtung an eine zentrale Auswertungseinrichtung zu übertragen. Dabei kann die zentrale Auswertungseinrichtung der Vorrichtung ausgebildet sein, um das erste Klassifizierungsergebnis 128₁ des ersten Zeitpunkts 127₁ und das erste Klassifizierungsergebnis 128₂ des zweiten Zeitpunkts 127₂, in Abhängigkeit des ersten Zeitpunkts bzw. des zweiten Zeitpunkts zu ordnen und beispielsweise in der Überwachungsausgabe 152 anzugeben. So ist beispielsweise das erste Klassifizierungsergebnis 128₁ (Bohren) zeitlich vor dem ersten Klassifizierungsergebnis 128₂ (Hämmern) in der Überwachungsausgabe 152 angeordnet, da der erste Zeitpunkt 127₁ vor dem zweiten Zeitpunkt 127₂ aufgetreten ist. Gemäß Fig. 5 können zu n Zeitpunkten 127₁ bis 127ₙ erste Klassifizierungsergebnisse 128₁ bis 128ₙ mit der Vorrichtung 100 erhalten werden, die durch die zentrale Auswertungseinrichtung abhängig von einem Zeitpunkt geordnet werden können und angegeben werden können. Gemäß Fig. 5 werden zeitliche Informationen bzw. Zeitpunkte mit Uhrzeit und Datum in einer Spalte angegeben. Optional ist auch nur die Angabe einer Uhrzeit oder nur die Angabe eines Datums möglich.

Das erste Klassifizierungsergebnis 128₁ bis 128ₙ kann gemäß einem Ausführungsbeispiel anzeigen, was in einem Überwachungsbereich für Tätigkeiten, Prozesse oder Phasen durchgeführt worden sind. Somit wird in der Überwachungsausgabe 152 beispielsweise nicht mehr das durch einen akustischen Sensor der Vorrichtung aufgenommen Audiosignal dargestellt, sondern eine Klassifizierung von Geräuschen in dem Audiosignal. Gemäß einem Ausführungsbeispiel kann die erste Übertragungseinrichtung der Vorrichtung ausgebildet sein, um das erste Klassifizierungsergebnis 128₁ bis 128, mit ersten örtlichen 129 oder zeitlichen 127 Informationen an die zentrale Auswertungseinrichtung zu übertragen. Die zentrale Auswertungseinrichtung kann ausgebildet sein, um das erste Klassifizierungsergebnis 128₁ bis 128ₙ in Verbindung mit den ersten örtlichen 129 und zeitlichen 127 Informationen als Überwachungsausgabe 152 für den Überwachungsbereich zu erzeugen.

Erfindungsgemäß weist die Vorrichtung nicht nur ein erstes Sensorsystem, sondern auch ein zweites Sensorsystem auf, das ein zweites Klassifizierungsergebnis 138₁, 138₂ erzeugt. Hierbei ist das erste Sensorsystem an einer ersten Stelle 129₁ bis 129ₙ anbringbar und das zweite Sensorsystem an einer zweiten Stelle 139₁, 139₂ anbringbar. Gemäß dem Ausführungsbeispiel aus Fig. 5 kann das erste Sensorsystem und das zweite Sensorsystem beispielsweise gleichzeitig Tätigkeiten, Prozesse, Phasen in dem Überwachungsbereich detektieren. So erhält die zentrale Auswertungseinrichtung beispielsweise für den ersten Zeitpunkt 127₁ sowohl ein erstes Klassifizierungsergebnis 128₁ von dem ersten Sensorsystem als auch ein zweites Klassifizierungsergebnis 138₁ von dem zweiten Sensorsystem. Diese beiden Klassifizierungsergebnisse 128₁, 138₁ können nun, da sie den gleichen Zeitpunkt aufweisen, gemäß ihrer örtlichen Information 129 in der Überwachungsausgabe 152 sortiert werden.

Gemäß einem Ausführungsbeispiel kann ein Sensorsystem wie zum Beispiel das erste Sensorsystem mehrere Aktionen/Tätigkeiten/Prozesse/Phasen in dem Überwachungsbereich zu einem gleichen Zeitpunkt 127ₙ erfassen. Somit kann beispielsweise das erste Klassifizierungsergebnis 128ₙ für einen Zeitpunkt 127ₙ drei Klassifizierungen (z. B. Presslufthammer, Elektromotor und Sägen) aufweisen. Somit können in der Überwachungsausgabe 152 beispielsweise alle drei Klassifizierungen des ersten Klassifizierungsergebnisses 128ₙ zum Zeitpunkt 127, mit der zugehörigen örtlichen Information 129ₙ verbunden dargestellt bzw. angezeigt werden.

Die Überwachungsausgabe 152 kann beispielsweise dem Nutzer der Vorrichtung auf einem externen Gerät, einem mobilen Gerät (wie z. B. einem Mobilgerät oder Tablet) bereitgestellt werden. Somit kann der Nutzer anhand der Überwachungsausgabe 152 feststellen, welche Tätigkeiten/Prozesse/Phasen in dem Überwachungsbereich über eine vorgegebene Zeitdauer stattgefunden haben. Hierbei wird dem Nutzer angezeigt, zu welchem Zeitpunkt und an welchem Ort innerhalb des Überwachungsbereichs welches Ereignis stattgefunden hat.

Gemäß einem Ausführungsbeispiel kann die tabellarische Darstellung aus Fig. 5 für die Klassifizierungsergebnisse 128, die zeitlichen Informationen 127 und die örtlichen Informationen 129 ein Zwischenergebnis der zentralen Auswertungseinrichtung darstellen, das beispielsweise mit einem vorgegebenen Prozess-Ablaufplan des Überwachungsbereichs verglichen werden kann.

In anderen Worten kann die zentrale Auswertungseinrichtung der Vorrichtung einen Speicher zum Speichern eines vorgegebenen Prozess-Ablaufplans, der eine Folge von Tätigkeiten in dem Überwachungsbereich aufweist, aufweisen. Des Weiteren kann die zentrale Auswertungseinrichtung einen Prozessor zum Anordnen des ersten Klassifizierungsergebnisses 128₁ bis 128ₙ und des zweiten Klassifizierungsergebnisses 138₁, 138₂ in einer Ordnung 152, die durch räumliche 129 oder zeitliche Informationen 127 über das erste Sensorsystem oder das zweite Sensorsystem definiert ist, wobei das erste Klassifizierungsergebnis 128₁ bis 128ₙ und das zweite Klassifizierungsergebnis 138₁, 138₂ auf die Tätigkeiten in dem Überwachungsbereich hinweisen. Gemäß einem Ausführungsbeispiel kann die zentrale Auswertungseinrichtung ausgebildet sein, um den vorgegebenen Prozess-Ablaufplan mit dem angeordneten ersten und zweiten Klassifizierungsergebnis (der Ordnung 152) zu vergleichen und eine Überwachungsausgabe in Abhängigkeit zu einem Ergebnis des Vergleichs zu erzeugen. In diesem Fall ist beispielsweise nicht die tabellarische Darstellung aus Fig. 5 die Überwachungsausgabe, sondern ein Unterschied zwischen dem vorgegebenen Prozess-Ablaufplan und dem angeordneten ersten und zweiten Klassifizierungsergebnis (der Ordnung 152).

So kann beispielsweise das zweite Sensorsystem zu einem zweiten Zeitpunkt 127₂ an der zweiten Stelle 139₂ eine Arbeitsaufnahme eines Krans (zweites Klassifizierungsergebnis 138₂) feststellen, obwohl beispielsweise in dem vorgegebenen Prozess-Ablaufplan diese Tätigkeit nicht zu dem zweiten Zeitpunkt 127₂ stattfinden sollte. Somit kann eine Überwachungsausgabe der zentralen Auswertungseinrichtung anzeigen, dass an dem Gebäudevorplatz 139₂ zum zweiten Zeitpunkt 127₂ der Kran seine Arbeit aufgenommen hat, oder nur anzeigen, dass ein Unterschied zwischen dem vorgegebenen Prozess-Ablaufplan und dem angeordneten ersten und zweiten Klassifizierungsergebnis aufgetreten ist.

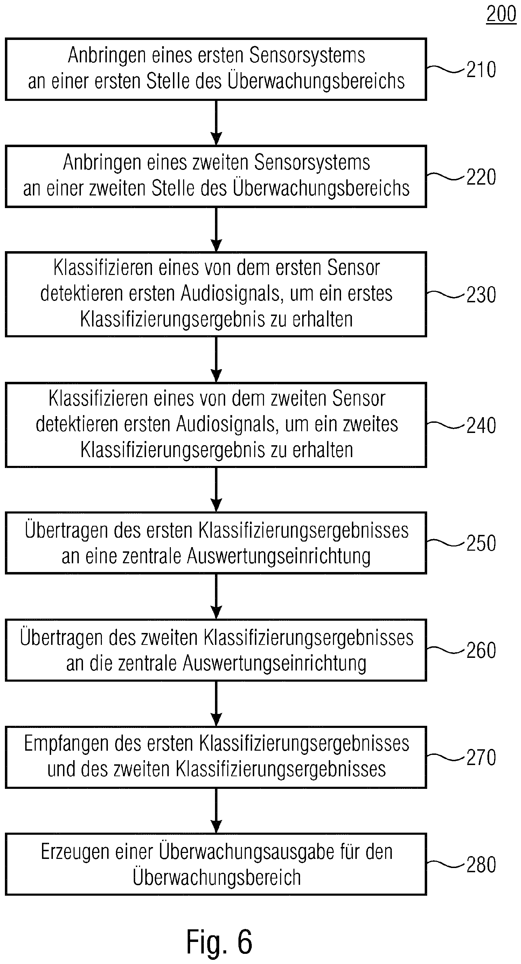

Fig. 6 zeigt ein Blockdiagramm eines Verfahrens 200 zur akustischen Überwachung eines Überwachungsbereichs. Das Verfahren 200 kann folgende Schritte aufweisen: Anbringen 210 eines ersten Sensorsystems mit einem ersten akustischen Sensor, einem ersten Prozessor und einer ersten Übertragungseinrichtung an einer ersten Stelle des ersten Überwachungsbereichs, Anbringen 220 eines zweiten Sensorsystems mit einem zweiten akustischen Sensor, einem zweiten Prozessor und einer zweiten Übertragungseinrichtung an einer zweiten Stelle des Überwachungsbereichs, die sich von der ersten Stelle unterscheidet, Klassifizieren 230 eines von dem ersten akustischen Sensor detektieren ersten Audiosignals mit dem ersten Prozessor, um ein erstes Klassifizierungsergebnis zu erhalten, Klassifizieren 240 eines von dem zweiten akustischen Sensor detektierten zweiten Audiosignals mit dem zweiten Prozessor, um ein zweites Klassifizierungsergebnis zu erhalten, Übertragen 250 des ersten Klassifizierungsergebnisses an eine zentrale Auswertungseinrichtung mit der ersten Übertragungseinrichtung, Übertragen 260 des zweiten Klassifizierungsergebnisses an die zentrale Auswertungseinrichtung mit der zweiten Übertragungseinrichtung, Empfangen 270 des ersten Klassifizierungsergebnisses und des zweiten Klassifizierungsergebnisses mit der zentralen Auswertungseinrichtung und Erzeugen 280 einer Überwachungsausgabe für den Überwachungsbereich abhängig von dem ersten Klassifizierungsergebnis und dem zweiten Klassifizierungsergebnis mit der zentralen Auswertungseinrichtung.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hard-ware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Beispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Beispiel umfasst einen Computer, auf dem das Computerprogramm zum Durchführen eines der hierin beschriebenen Verfahren installiert ist.

Ein weiteres Beispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Beispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Beispielen kann ein feldprogrammierbares Gatterarray mit einem Mikroprozessor zusammenwirken, um eines der hierin beschriebenen Verfahren durchzuführen. Allgemein werden die Verfahren bei einigen Beispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen

[1] A. Liutkus, D. Fitzgerald, Z. Rafii, B. Pardo, and L. Daudet, "Kernel additive models for source separation," IEEE Trans. Signal Process., vol. 62, no. 16, pp. 4298-4310, 2014
[2] D. Barry, B. Lawlor, and E. Coyle, "Sound source separation: azimuth discrimination and resynthesis," in Proc. 7th Int. Conf. Digital Audio Effects (DAFx'04), Naples, Italy, 2004.
[3] Referenz: C. Avendano, "Frequency-domain source identification and manipulation in stereo mixes for enhancement, suppression and re-panning applications," in Proc. IEEE Workshop Appl. Signal Process. Audio Acoust. (WASPAA), New York, USA, 2003, pp. 55-58.
[4] T. Pratzlich, R. M. Bittner, A. Liutkus, and M. Müller, "Kernel additive modeling for interference reduction in multi-channel music recordings," in Proc. Int. Conf. Acoust. Speech Signal Process. (ICASSP), Brisbane, Australia, 2015, pp. 584-588.

## Patentansprüche

1. Vorrichtung (100) zur akustischen Überwachung eines Überwachungsbereichs (110), mit folgenden Merkmalen:
einem ersten Sensorsystem (120) mit einem ersten akustischen Sensor (122), einem ersten Prozessor (124) und einer ersten Übertragungseinrichtung (126), das an einer ersten Stelle (129₁-129ₙ) des Überwachungsbereichs (110) anbringbar ist;
einem zweiten Sensorsystem (130) mit einem zweiten akustischen Sensor (132), einem zweiten Prozessor (134) und einer zweiten Übertragungseinrichtung (136), das an einer zweiten Stelle (139₁,139₂) des Überwachungsbereichs (110) anbringbar ist, die sich von der ersten Stelle (129₁-129ₙ) unterscheidet,
wobei der erste Prozessor (124) ausgebildet ist, um ein von dem ersten akustischen Sensor (122) detektiertes erstes Audiosignal (142, 142a, 142b) zu klassifizieren, um ein erstes Klassifizierungsergebnis (128₁-128ₙ) zu erhalten,
wobei der zweite Prozessor (134) ausgebildet ist, um ein von dem zweiten akustischen Sensor (132) detektiertes zweites Audiosignal (144, 144a, 144b) zu klassifizieren, um ein zweites Klassifizierungsergebnis (138₁, 138₂) zu erhalten,
wobei die erste Übertragungseinrichtung (126) ausgebildet ist, um das erste Klassifizierungsergebnis (128₁-128ₙ) an eine zentrale Auswertungseinrichtung (150) zu übertragen,
wobei die zweite Übertragungseinrichtung (136) ausgebildet ist, um das zweite Klassifizierungsergebnis (138₁, 138₂) an die zentrale Auswertungseinrichtung (150) zu übertragen,
der zentralen Auswertungseinrichtung (150), wobei die zentrale Auswertungseinrichtung (150) ausgebildet ist, um das erste Klassifizierungsergebnis (128₁-128ₙ) zu empfangen und das zweite Klassifizierungsergebnis (138₁, 138₂) zu empfangen, und um abhängig von dem ersten Klassifizierungsergebnis (128₁-128ₙ) und dem zweiten Klassifizierungsergebnis (138₁, 138₂) eine Überwachungsausgabe (152) für den Überwachungsbereich (110) zu erzeugen,
**dadurch gekennzeichnet, dass**
die erste Übertragungseinrichtung (126) ausgelegt ist, um nur dann ein erstes Signal an die zentrale Auswertungseinrichtung (150) zu übertragen, wenn das erste Klassifizierungsergebnis (128₁-128ₙ) mit einem ersten vorbestimmten Klassifizierungsergebnis übereinstimmt;
die zweite Übertragungseinrichtung (136) ausgelegt ist, um nur dann ein zweites Signal an die zentrale Auswertungseinrichtung (150) zu übertragen, wenn das zweite Klassifizierungsergebnis (138₁, 138₂) mit einem zweiten vorbestimmten Klassifizierungsergebnis übereinstimmt; und
die zentrale Auswertungseinrichtung (150) ausgelegt ist, um anhand des ersten Signals zu zählen, wie oft pro Zeitdauer das erste Sensorsystem (120) das erste vorbestimmte Klassifizierungsergebnis ermittelt hat oder um anhand des zweiten Signals zu zählen, wie oft pro Zeitdauer das zweite Sensorsystem (130) das zweite vorbestimmte Klassifizierungsergebnis ermittelt hat.

2. Vorrichtung (100) gemäß Anspruch 1, wobei der erste akustische Sensor (122) ausgebildet ist, um einen ersten Pegel des ersten Audiosignals (142, 142a, 142b) zu messen; und
wobei die erste Übertragungseinrichtung (126) ausgebildet ist, um den ersten Pegel an die zentrale Auswertungseinrichtung (150) zu übertragen; und
wobei die zentrale Auswertungseinrichtung (150) ausgebildet ist, um bei einem Überschreiten eines oberen Grenzwerts durch den ersten Pegel, dieses Überschreiten in der Überwachungsausgabe (152) anzuzeigen;
und/oder
wobei der zweite akustische Sensor (132) ausgebildet ist, um einen zweiten Pegel des zweiten Audiosignals (144, 144a, 144b) zu messen;
wobei die zweite Übertragungseinrichtung (136) ausgebildet ist, um den zweiten Pegel an die zentrale Auswertungseinrichtung (150) zu übertragen; und
wobei die zentrale Auswertungseinrichtung (150) ausgebildet ist, um bei einer Übereinstimmung des ersten Klassifizierungsergebnisses (128₁-128ₙ) mit dem zweiten Klassifizierungsergebnis (138₁, 138₂), in Abhängigkeit des ersten Pegels und des zweiten Pegels eine Quelle (140, 140a, 140b, 140c, 140d, 129) des ersten Audiosignals (142, 142a, 142b) und des zweiten Audiosignals (144, 144a, 144b), unter Verwendung von Informationen über die erste Stelle (129₁-129ₙ) und Informationen über die zweite Stelle, räumlich in dem Überwachungsbereich (110) zu lokalisieren.

3. Vorrichtung (100) gemäß Anspruch 1 oder 2, wobei das erste Audiosignal (142, 142a, 142b), detektiert von dem ersten akustischen Sensor (122), eine Überlagerung von zumindest zwei Schallereignissen (140, 140a, 140b, 140c, 140d) ist; und
wobei der erste Prozessor (124) ausgebildet ist, um einen Quellentrennungsalgorithmus auf das erste Audiosignal (142, 142a, 142b) anzuwenden, um die zumindest zwei Schallereignisse (140, 140a, 140b, 140c, 140d) zu klassifizieren oder um ein erstes Quellensignal und ein zweites Quellensignal zu erhalten, die die zumindest zwei Schallereignisse (140, 140a, 140b, 140c, 140d) darstellen, um das erste Quellensignal und das zweite Quellensignal zu klassifizieren.

4. Vorrichtung (100) gemäß einem der Ansprüche 1 bis 3, wobei das erste Klassifizierungsergebnis (128₁-128ₙ) und das zweite Klassifizierungsergebnis (138₁, 138₂) ausgebildet sind, um verwendete Geräte in dem Überwachungsbereich (110), Tätigkeiten in dem Überwachungsbereich (110), Lautstärken in dem Überwachungsbereich (110), Phasen eines Prozesses in dem Überwachungsbereich (110) oder eine Übereinstimmung zumindest eines Teils des ersten Audiosignals (142, 142a, 142b) oder des zweiten Audiosignals (144, 144a, 144b) mit einem vorbestimmten Klassifizierungsergebnis anzuzeigen.

5. Vorrichtung (100) gemäß einem der Ansprüche 1 bis 4, wobei die erste Übertragungseinrichtung (126) ausgebildet ist, um das erste Klassifizierungsergebnis (128₁-128ₙ) mit ersten örtlichen (129, 129₁-129ₙ) oder zeitlichen (127, 127₁-127ₙ) Informationen an die zentrale Auswertungseinrichtung (150) zu übertragen; und wobei die zentrale Auswertungseinrichtung (150) ausgebildet ist, um das erste Klassifizierungsergebnis (128₁-128ₙ) in Verbindung mit den ersten örtlichen (129, 129₁-129ₙ) und zeitlichen (127, 127₁-127ₙ) Informationen als Überwachungsausgabe (152) für den Überwachungsbereich (110) zu erzeugen,
wobei die zentrale Auswertungseinrichtung (150) folgende Merkmale aufweist:
einen Speicher (154) zum Speichern eines vorgegebenen Prozess-Ablaufplans, der eine Folge von Tätigkeiten in dem Überwachungsbereich (110) aufweist,
einen Prozessor (156) zum Anordnen des ersten Klassifizierungsergebnisses (128₁-128ₙ) und des zweiten Klassifizierungsergebnisses (138₁, 138₂) in einer Ordnung (152), die durch räumliche (129, 129₁-129ₙ, 139₁, 139₂) oder zeitliche (127, 127₁-127ₙ) Informationen über das erste Sensorsystem (120) oder das zweite Sensorsystem (130) definiert ist, wobei das erste Klassifizierungsergebnis (128₁-128ₙ) und das zweite Klassifizierungsergebnis (138₁, 138₂) auf die Tätigkeiten in dem Überwachungsbereich (110) hinweisen;
zum Vergleich des vorgegebenen Prozess-Ablaufplans mit dem angeordneten ersten und zweiten Klassifizierungsergebnis (138₁, 138₂); und
zum Erzeugen einer Überwachungsausgabe (152) in Abhängigkeit zu einem Ergebnis des Vergleichs.

6. Vorrichtung (100) gemäß Anspruch 5, wobei die Überwachungsausgabe (152) einen Unterschied zwischen dem vorgegebenen Prozess-Ablaufplan und dem angeordneten ersten und zweiten Klassifizierungsergebnis (128₁-128ₙ, 138₁, 138₂) anzeigt.

7. Vorrichtung (100) gemäß einem der Ansprüche 1 bis 6, wobei das erste Sensorsystem (120) oder das zweite Sensorsystem (130) ausgebildet ist, um mit dem ersten akustischen Sensor (122) durchgehend ein erstes Audiosignal (142, 142a, 142b) zu detektieren, um das erste Audiosignal (142, 142a, 142b) in dem ersten Prozessor (124) innerhalb eines ersten maximalen Zeitraums zu klassifizieren, wobei der erste maximale Zeitraum kürzer als fünf Sekunden ist, und wobei die erste Übertragungseinrichtung (126) ausgebildet ist, um das erste Klassifizierungsergebnis (128₁-128ₙ) innerhalb eines zweiten maximalen Zeitraums an die zentrale Auswertungseinrichtung (150) zu übertragen, wobei der zweite maximale Zeitraum kürzer als fünf Sekunden ist.

8. Vorrichtung (100) gemäß einem der Ansprüche 1 bis 7, wobei das erste Sensorsystem (120) ausgebildet ist, um das erste Klassifizierungsergebnis (128₁-128ₙ) zu einem ersten Zeitpunkt und zu einem zweiten Zeitpunkt mittels des ersten Prozessors (124) zu erhalten und mittels der ersten Übertragungseinrichtung (126) an die zentrale Auswertungseinrichtung (150) zu übertragen; und
wobei die zentrale Auswertungseinrichtung (150) ausgebildet ist, um das erste Klassifizierungsergebnis (128₁-128ₙ) des ersten Zeitpunkts (127₁-127ₙ) und das erste Klassifizierungsergebnis (128₁-128ₙ) des zweiten Zeitpunkts (127₁-127ₙ), in Abhängigkeit des ersten Zeitpunkts (127₁-127ₙ) oder des zweiten Zeitpunkts (127₁-127ₙ) zu ordnen und anzugeben.

9. Vorrichtung (100) gemäß einem der Ansprüche 1 bis 8, wobei der erste akustische Sensor (122) ausgebildet ist, um das erste Audiosignal (142, 142a, 142b) zu detektieren;
wobei der erste akustische Sensor (122) ausgebildet ist, um einen ersten Pegel des ersten Audiosignals (142, 142a, 142b) zu messen; und
wobei der erste akustische Sensor (122) ausgebildet ist, um den ersten Prozessor (124) oder die erste Übertragungseinrichtung (126) nur bei Überschreiten eines unteren Grenzwerts für den ersten Pegel von einem Schlafmodus in einen Betriebsmodus zu versetzen, und
wobei der erste Prozessor (124) ausgebildet ist, um nur in dem Betriebsmodus das erste Klassifizierungsergebnis (128₁-128ₙ) oder das zweite Klassifizierungsergebnis (138₁, 138₂) zu bestimmen, oder
wobei die erste Übertragungseinrichtung (126) ausgebildet ist, um nur in dem Betriebsmodus eine Übertragung durchzuführen, und
wobei die erste Übertragungseinrichtung (126) oder der erste Prozessor (124) ausgebildet sind, um im Schlafmodus weniger Energie als im Betriebsmodus zu verbrauchen.

10. Vorrichtung (100) gemäß einem der Ansprüche 1 bis 9, wobei der erste akustische Sensor (122) ausgebildet ist, um das erste Audiosignal (142, 142a, 142b) zu detektieren;
wobei der erste akustische Sensor (122) ausgebildet ist, um einen ersten Pegel des ersten Audiosignals (142, 142a, 142b) zu messen; und
wobei der erste akustische Sensor (122) ausgebildet ist, um den ersten Prozessor (124) oder die erste Übertragungseinrichtung (126) so zu setzen, dass dann das erste Klassifizierungsergebnis (128₁-128ₙ) von dem ersten Prozessor (124) bestimmt wird und an die zentrale Auswertungseinrichtung (150) mittels der ersten Übertragungseinrichtung (126) übertragen wird, wenn der erste Pegel größer als ein unterer Grenzwert ist, und wenn der erste Pegel kleiner oder gleich dem unteren Grenzwert ist, kein erstes Klassifizierungsergebnis (128₁-128ₙ) von dem ersten Prozessor (124) bestimmt wird und an die zentrale Auswertungseinrichtung (150) mittels der ersten Übertragungseinrichtung (126) übertragen wird.

11. Vorrichtung (100) gemäß einem der Ansprüche 1 bis 10, wobei die erste Übertragungseinrichtung (126) ausgebildet ist, um an die zentrale Auswertungseinrichtung (150) eine Identifikation des ersten Sensorsystems (120) mit dem ersten Klassifizierungsergebnis (128₁-128ₙ) zu übertragen;
wobei die zweite Übertragungseinrichtung (136) ausgebildet ist, um an die zentrale Auswertungseinrichtung (150) eine Identifikation des zweiten Sensorsystems (130) mit dem zweiten Klassifizierungsergebnis (138₁, 138₂) zu übertragen;
wobei die zentrale Auswertungseinrichtung (150) einen Speicher (154) aufweist, wobei der Speicher eine Zuordnung der Identifikation des ersten Sensorsystems (120) mit der ersten Stelle (129₁-129ₙ) und der Identifikation des zweiten Sensorsystems (130) mit der zweiten Stelle (139₁, 139₂) aufweist;
wobei die zentrale Auswertungseinrichtung (150) ausgelegt ist, um basierend auf der Identifikation des ersten Sensorsystems (120) aus dem Speicher die erste Stelle (129₁-129ₙ) zu ermitteln und basierend auf der Identifikation des zweiten Sensorsystems (130) aus dem Speicher die zweite Stelle (139₁, 139₂) zu ermitteln; und
wobei die zentrale Auswertungseinrichtung (150) ausgelegt ist, um basierend auf der ersten Stelle (129₁-129ₙ), der zweiten Stelle (139₁, 139₂), dem ersten Klassifizierungsergebnis (128₁-128ₙ) oder dem zweiten Klassifizierungsergebnis (138₁, 138₂) einen ersten Quellenbereich (I, II, III, IV, V, VI) des ersten Audiosignals (142, 142a, 142b) und einen zweiten Quellenbereich (I, II, III, IV, V, VI) des zweiten Audiosignals (144, 144a, 144b) räumlich in dem Überwachungsbereich (110) zu lokalisieren.

12. Vorrichtung (100) gemäß einem der Ansprüche 1 bis 11, wobei die erste Übertragungseinrichtung (126) ausgebildet ist, um nur das erste Klassifizierungsergebnis (128₁-128ₙ) oder ein verarbeitetes erstes Audiosignal (142, 142a, 142b) an die zentrale Auswertungseinrichtung (150) zu übertragen; und
wobei die zweite Übertragungseinrichtung (136) ausgebildet ist, um nur das zweite Klassifizierungsergebnis (138₁, 138₂) oder ein verarbeitetes zweites Audiosignal (144, 144a, 144b) an die zentrale Auswertungseinrichtung (150) zu übertragen.

13. Vorrichtung (100) gemäß einem der Ansprüche 1 bis 12, wobei das erste vorbestimmte Klassifizierungsergebnis und das zweite vorbestimmte Klassifizierungsergebnis ein Klassifizierungsergebnis (128) für ein Fahrzeug ist;
wobei der Überwachungsbereich (110) eine Straße, ein Straßennetz oder ein Schienennetz ist;
wobei das erste Sensorsystem (120) oder das zweite Sensorsystem (130) an Straßen oder Schienen anbringbar ist,
wobei die zentrale Auswertungseinrichtung (150) ausgebildet ist, um eine Auslastung des Überwachungsbereichs (110) pro Stelle (129, 129₁-129ₙ, 139₁, 139₂) oder pro Gruppe an Stellen (129, 129₁-129ₙ, 139₁, 139₂) zu liefern.

14. Verfahren (200) zur akustischen Überwachung eines Überwachungsbereichs (110), mit folgenden Schritten:
Anbringen (210) eines ersten Sensorsystems (120) mit einem ersten akustischen Sensor (122), einem ersten Prozessor (124) und einer ersten Übertragungseinrichtung (126) an einer ersten Stelle (129₁-129ₙ) des Überwachungsbereichs (110);
Anbringen (220) eines zweiten Sensorsystems (130) mit einem zweiten akustischen Sensor (132), einem zweiten Prozessor (134) und einer zweiten Übertragungseinrichtung (136) an einer zweiten Stelle des Überwachungsbereichs (110), die sich von der ersten Stelle (129₁-129ₙ) unterscheidet,
Klassifizieren (230) eines von dem ersten akustischen Sensor (122) detektierten ersten Audiosignals (142, 142a, 142b) mit dem ersten Prozessor (124), um ein erstes Klassifizierungsergebnis (128₁-128ₙ) zu erhalten;
Klassifizieren (240) eines von dem zweiten akustischen Sensor (132) detektierten zweiten Audiosignals (144, 144a, 144b) mit dem zweiten Prozessor (134), um ein zweites Klassifizierungsergebnis (138₁, 138₂) zu erhalten;
Übertragen (250) des ersten Klassifizierungsergebnisses (128₁-128ₙ) an eine zentrale Auswertungseinrichtung (150) mit der ersten Übertragungseinrichtung (126);
Übertragen (260) des zweiten Klassifizierungsergebnisses (138₁, 138₂) an die zentrale Auswertungseinrichtung (150) mit der zweiten Übertragungseinrichtung (136);
Empfangen (270) des ersten Klassifizierungsergebnisses (128₁-128ₙ) und des zweiten Klassifizierungsergebnisses (138₁, 138₂) mit der zentralen Auswertungseinrichtung (150); und
Erzeugen (280) einer Überwachungsausgabe (152) für den Überwachungsbereich (110) abhängig von dem ersten Klassifizierungsergebnis (128₁-128ₙ) und dem zweiten Klassifizierungsergebnis (138₁, 138₂) mit der zentralen Auswertungseinrichtung (150),
**dadurch gekennzeichnet, dass**
nur dann ein erstes Signal an die zentrale Auswertungseinrichtung (150) übertragen wird, wenn das erste Klassifizierungsergebnis (128₁-128ₙ) mit einem ersten vorbestimmten Klassifizierungsergebnis übereinstimmt;
nur dann ein zweites Signal an die zentrale Auswertungseinrichtung (150) übertragen wird, wenn das zweite Klassifizierungsergebnis (138₁, 138₂) mit einem zweiten vorbestimmten Klassifizierungsergebnis übereinstimmt; und
anhand des ersten Signals gezählt wird, wie oft pro Zeitdauer das erste Sensorsystem (120) das erste vorbestimmte Klassifizierungsergebnis ermittelt hat oder anhand des zweiten Signals gezählt wird, wie oft pro Zeitdauer das zweite Sensorsystem (130) das zweite vorbestimmte Klassifizierungsergebnis ermittelt hat.

15. Computerprogramm mit einem Programmcode zur Durchführung des Verfahrens (200) nach Anspruch 14, wenn das Programm auf einem Computer abläuft.

## Claims

1. A device (100) for acoustic monitoring of a monitoring area (110), comprising:
a first sensor system (120) comprising a first acoustic sensor (122), a first processor (124), and first transmission means (126), which system may be mounted at a first location (129₁-129ₙ) of the monitoring area (110);
a second sensor system (130) comprising a second acoustic sensor (132), a second processor (134), and second transmission means (136), which system may be mounted at a second location (139₁, 139₂) of the monitoring area (110) that is different from the first location (129₁-129ₙ),
wherein the first processor (124) is configured to classify a first audio signal (142, 142a, 142b) detected by the first acoustic sensor (122) so as to obtain a first classification result (128₁-128ₙ),
wherein the second processor (134) is configured to classify a second audio signal (144, 144a, 144b) detected by the second acoustic sensor (132) so as to obtain a second classification result (138₁, 138₂),
wherein the first transmission means (126) is configured to transmit the first classification result (128₁-128ₙ) to a central evaluation means (150),
wherein the second transmission means (136) is configured to transmit the second classification result (138₁, 138₂) to the central evaluation means (150),
of the central evaluation means (150), the central evaluation means (150) being configured to receive the first classification result (128₁-128ₙ) and to receive the second classification result (138₁, 138₂), and to generate a monitoring output (152) for the monitoring area (110) as a function of the first classification result (128₁-128ₙ) and the second classification result (138₁, 138₂),
**characterized in that**
the first transmission means (126) is configured to transmit a first signal to the central evaluation means (150) only if the first classification result (128₁-128ₙ) matches a first predetermined classification result;
the second transmission means (136) is configured to transmit a second signal to the central evaluation means (150) only if the second classification result (138₁, 138₂) matches a second predetermined classification result; and
the central evaluation means (150) is configured to count, on the basis of the first signal, how many times, per time interval, the first sensor system (120) has determined the first predetermined classification result, or to count, on the basis of the second signal, how many times, per time interval, the second sensor system (130) has determined the second predetermined classification result.

2. The device (100) as claimed in claim 1, wherein the first acoustic sensor (122) is configured to measure a first level of the first audio signal (142, 142a, 142b); and
wherein the first transmission means (126) is configured to transmit the first level to the central evaluation means (150); and
wherein the central evaluation means (150) is configured, when an upper limit value is exceeded by the first level, to indicate this exceeding in the monitoring output (152);
and/or
wherein the second acoustic sensor (132) is configured to measure a second level of the second audio signal (144, 144a, 144b);
wherein the second transmission means (136) is configured to transmit the second level to the central evaluation means (150); and
wherein the central evaluation means (150) is configured, when the first classification result (128₁-128ₙ) matches the second classification result (138₁, 138₂), to spatially locate a source (140, 140a, 140b, 140c, 140d, 129) of the first audio signal (142, 142a, 142b) and of the second audio signal (144, 144a, 144b) in the monitoring area (110) as a function of the first level and of the second level while using information about the first location (129₁-129ₙ) and information about the second location.

3. The device (100) as claimed in claim 1 or 2, wherein the first audio signal (142, 142a, 142b) detected by the first acoustic sensor (122) is a superposition of at least two sound events (140, 140a, 140b, 140c, 140d); and
wherein the first processor (124) is configured to apply a source separation algorithm to the first audio signal (142, 142a, 142b) to classify the at least two sound events (140, 140a, 140b, 140c, 140d) or to obtain a first source signal and a second source signal which represent the at least two sound events (140, 140a, 140b, 140c, 140d) so as to classify the first source signal and the second source signal.

4. The device (100) as claimed in any of claims 1 to 3, wherein the first classification result (128₁-128ₙ) and the second classification result (138₁, 138₂) are configured to indicate used appliances in the monitoring area (110), activities in the monitoring area (110), volume levels in the monitoring area (110), phases of a process in the monitoring area (110), or a match of at least a portion of the first audio signal (142, 142a, 142b) or of the second audio signal (144, 144a, 144b) with a predetermined classification result.

5. The device (100) as claimed in any of claims 1 to 4, wherein the first transmission means (126) is configured to transmit the first classification result (128₁-128ₙ) comprising first local (129, 129₁-129ₙ) or temporal (127, 127₁-127ₙ) information to the central evaluation means (150); and
wherein the central evaluation means (150) is configured to generate the first classification result (128₁-128ₙ) in conjunction with the first local (129, 129₁-129ₙ) and temporal (127, 127₁-127ₙ) information as a monitoring output (152) for the monitoring area (110),
wherein the central evaluation means (150) comprises:
a memory (154) for storing a predetermined process schedule plan comprising a series of activities in the monitoring area (110),
a processor (156) for arranging the first classification result (128₁-128ₙ) and the second classification result (138₁, 138₂) in an order (152) defined by spatial (129, 129₁-129ₙ, 139₁, 139₂) or temporal (127, 127₁-127ₙ) information about the first sensor system (120) or the second sensor system (130), wherein the first classification result (128₁-128ₙ) and the second classification result (138₁, 138₂) indicate the activities in the monitoring area (110);
for comparing the predetermined process schedule plan with the arranged first and second classification results (138₁, 138₂); and
for generating a monitoring output (152) as a function of a result of the comparison.

6. The device (100) as claimed in claim 5, wherein the monitoring output (152) indicates a difference between the predetermined process schedule plan and the arranged first and second classification results (128₁-128ₙ, 138₁, 138₂).

7. The device (100) as claimed in any of claims 1 to 6, wherein the first sensor system (120) or the second sensor system (130) is configured to continuously detect a first audio signal (142, 142a, 142b) by using the first acoustic sensor (122) so as to classify the first audio signal (142, 142a, 142b) in the first processor (124) within a first maximum time period, said first maximum time period being shorter than five seconds, and wherein the first transmission means (126) is configured to transmit the first classification result (128₁-128ₙ) to the central evaluation means (150) within a second maximum time period, said second maximum time period being shorter than five seconds.

8. The device (100) as claimed in any of claims 1 to 7, wherein the first sensor system (120) is configured to obtain the first classification result (128₁-128ₙ) at a first point in time and at a second point in time by means of the first processor (124) and to transmit it to the central evaluation means (150) by means of the first transmission means (126); and
wherein the central evaluation means (150) is configured to order and indicate the first classification result (128₁-128ₙ) of the first point in time (127₁-127ₙ) and the first classification result (128₁-128ₙ) of the second point in time (127₁-127ₙ) as a function of the first point in time (127₁-127ₙ) or of the second point in time (127₁-127ₙ).

9. The device (100) as claimed in any of claims 1 to 8, wherein the first acoustic sensor (122) is configured to detect the first audio signal (142, 142a, 142b);
wherein the first acoustic sensor (122) is configured to measure a first level of the first audio signal (142, 142a, 142b); and
wherein the first acoustic sensor (122) is configured to switch the first processor (124) or the first transmission means (126) from a sleep mode to an operating mode only if a lower limit value for the first level is exceeded, and
wherein the first processor (124) is configured to determine the first classification result (128₁-128ₙ) or the second classification result (138₁, 138₂) only in the operating mode, or
wherein the first transmission means (126) is configured to perform transmission only in the operating mode, and
wherein the first transmission means (126) or the first processor (124) is configured to consume less power in the sleep mode than in the operating mode.

10. The device (100) as claimed in any of claims 1 to 9, wherein the first acoustic sensor (122) is configured to detect the first audio signal (142, 142a, 142b);
wherein the first acoustic sensor (122) is configured to measure a first level of the first audio signal (142, 142a, 142b); and
wherein the first acoustic sensor (122) is configured to set the first processor (124) or the first transmission means (126) so that the first classification result (128₁-128ₙ) will be determined by the first processor (124) and be transmitted to the central evaluation means (150) by means of the first transmission means (126) if the first level is higher than a lower limit value, and so that no first classification result (128₁-128ₙ) will be determined by the first processor (124) and be transmitted to the central evaluation means (150) by means of the first transmission means (126) if the first level is lower than or equal to the lower limit value.

11. The device (100) as claimed in any of claims 1 to 10, wherein the first transmission means (126) is configured to transmit to the central evaluation means (150) an identification of the first sensor system (120) together with the first classification result (128₁-128ₙ);
wherein the second transmission means (136) is configured to transmit to the central evaluation means (150) an identification of the second sensor system (130) together with the second classification result (138₁, 138₂);
wherein the central evaluation means (150) comprises a memory (154), the memory comprising an association of the identification of the first sensor system (120) with the first location (129₁-129ₙ) and an association of the identification of the second sensor system (130) with the second location (139₁, 139₂);
wherein the central evaluation means (150) is configured to determine the first location (129₁-129ₙ) on the basis of the identification of the first sensor system (120) from the memory and to determine the second location (139₁, 139₂) on the basis of the identification of the second sensor system (130) from the memory; and
wherein the central evaluation means (150) is configured to spatially locate, in the monitoring region (110), a first source region (I, II, III, IV, V, VI) of the first audio signal (142, 142a, 142b) and a second source region (I, II, III, IV, V, VI) of the second audio signal (144, 144a, 144b) on the basis of the first location (129₁-129ₙ), the second location (139₁, 139₂), the first classification result (128₁-128ₙ) or the second classification result (138₁, 138₂).

12. The device (100) as claimed in any of claims 1 to 11, wherein the first transmission means (126) is configured to transmit only the first classification result (128₁-128ₙ) or a processed first audio signal (142, 142a, 142b) to the central evaluation means (150); and
wherein the second transmission means (136) is configured to transmit only the second classification result (138₁, 138₂) or a processed second audio signal (144, 144a, 144b) to the central evaluation means (150).

13. The device (100) as claimed in any of claims 1 to 12, wherein the first predetermined classification result and the second predetermined classification result are a classification result (128) for a vehicle;
wherein the monitoring area (110) is a road, a road network or a rail network;
wherein the first sensor system (120) or the second sensor system (130) may be mounted to roads or rails,
wherein the central evaluation means (150) is configured to provide capacity utilization of the monitoring area (110) per location (129, 129₁-129ₙ, 139₁, 139₂) or per group of locations (129, 129₁-129ₙ, 139₁, 139₂).

14. A method (200) of acoustic monitoring of a monitoring area (110), comprising the following steps:
mounting (210) a first sensor system (120) comprising a first acoustic sensor (122), a first processor (124) and first transmission means (126) at a first location (129₁-129ₙ) of the monitoring area (110);
mounting (220) a second sensor system (130) comprising a second acoustic sensor (132), a second processor (134) and second transmission means (136) at a second location of the monitoring area (110), which is different from the first location (129₁-129ₙ),
classifying (230) a first audio signal (142, 142a, 142b) detected by the first acoustic sensor (122) by using the first processor (124) to obtain a first classification result (128₁-128ₙ);
classifying (240) a second audio signal (144, 144a, 144b) detected by the second acoustic sensor (132) by using the second processor (134) to obtain a second classification result (138₁, 138₂);
transmitting (250) the first classification result (128₁-128ₙ) to a central evaluation means (150) on the part of the first transmission means (126);
transmitting (260) the second classification result (138₁, 138₂) to the central evaluation means (150) on the part of the second transmission means (136);
receiving (270) the first classification result (128₁-128ₙ) and the second classification result (138₁, 138₂) on the part of central evaluation means (150); and
generating (280) a monitoring output (152) for the monitoring area (110) as a function of the first classification result (128₁-128ₙ) and the second classification result (138₁, 138₂) on the part of the central evaluation means (150),
**characterized in that**
a first signal is transmitted to the central evaluation means (150) only if the first classification result (128₁-128ₙ) matches a first predetermined classification result;
a second signal is transmitted to the central evaluation means (150) only if the second classification result (138₁, 138₂) matches a second predetermined classification result; and
it is counted, on the basis of the first signal, how many times, per time interval, the first sensor system (120) has determined the first predetermined classification result, or it is counted, on the basis of the second signal, how many times, per time interval, the second sensor system (130) has determined the second predetermined classification result.

15. A computer program comprising a program code for performing the method (200) as claimed in claim 14, when the program runs on a computer.

## Revendications

1. Dispositif (100) pour la surveillance acoustique d'une zone de surveillance (110), aux caractéristiques suivantes:
un premier système de capteur (120) avec un premier capteur acoustique (122), un premier processeur (124) et un premier moyen de transmission (126), qui peut être placé à un premier endroit (129₁ à 129ₙ) de la zone de surveillance (110);
un deuxième système de capteur (130) avec un deuxième capteur acoustique (132), un deuxième processeur (134) et un deuxième moyen de transmission (136), qui peut être placé à un deuxième endroit (139₁,139₂) de la zone de surveillance (110) qui diffère du premier endroit (129₁ à 129ₙ),
dans lequel le premier processeur (124) est configuré pour classifier un premier signal audio (142, 142a, 142b) détecté par le premier capteur acoustique (122) pour obtenir un premier résultat de classification (128₁ à 128ₙ),
dans lequel le deuxième processeur (134) est configuré pour classifier un deuxième signal audio (144, 144a, 144b) détecté par le deuxième capteur acoustique (132) pour obtenir un deuxième résultat de classification (138₁, 138₂),
dans lequel le premier moyen de transmission (126) est conçu pour transmettre le premier résultat de classification (128₁ à 128ₙ) à un moyen d'évaluation central (150),
dans lequel le deuxième moyen de transmission (136) est conçu pour transmettre le deuxième résultat de classification (138₁, 138₂) au moyen d'évaluation central (150),
du moyen d'évaluation central (150), dans lequel le moyen d'évaluation central (150) est conçu pour recevoir le premier résultat de classification (128₁ à 128ₙ) et pour recevoir le deuxième résultat de classification (138₁, 138₂), et pour générer, en fonction du premier résultat de classification (128₁ à 128ₙ) et du deuxième résultat de classification (138₁, 138₂), une sortie de surveillance (152) pour la zone de surveillance (110),
**caractérisé par le fait que**
le premier moyen de transmission (126) est conçu pour ne transmettre un premier signal au moyen d'évaluation central (150) que lorsque le premier résultat de classification (128i à 128ₙ) coïncide avec un premier résultat de classification prédéterminé;
le deuxième moyen de transmission (136) est conçu pour ne transmettre un deuxième signal au moyen d'évaluation central (150) que lorsque le deuxième résultat de classification (138₁, 138₂) coïncide avec un deuxième résultat de classification prédéterminé; et
le moyen d'évaluation central (150) est conçu pour compter, au moyen du premier signal, le nombre de fois par période de temps que le premier système de capteur (120) a déterminé le premier résultat de classification prédéterminé ou pour compter, au moyen du deuxième signal, le nombre de fois par période de temps que le deuxième système de capteur (130) a déterminé le deuxième résultat de classification prédéterminé.

2. Dispositif (100) selon la revendication 1, dans lequel le premier capteur acoustique (122) est conçu pour mesurer un premier niveau du premier signal audio (142, 142a, 142b); et
dans lequel le premier moyen de transmission (126) est conçu pour transmettre le premier niveau au moyen d'évaluation central (150); et
dans lequel le moyen d'évaluation central (150) est conçu pour indiquer, en cas de dépassement d'une valeur limite supérieure par le premier niveau, ce dépassement dans la sortie de surveillance (152);
et/ou
dans lequel le deuxième capteur acoustique (132) est conçu pour mesurer un deuxième niveau du deuxième signal audio (144, 144a, 144b);
dans lequel le deuxième moyen de transmission (136) est conçu pour transmettre le deuxième niveau au moyen d'évaluation central (150); et
dans lequel le moyen d'évaluation central (150) est conçu pour classifier, en cas de coïncidence du premier résultat de classification (128₁ à 128ₙ) avec le deuxième résultat de classification (138₁, 138₂), en fonction du premier niveau et du deuxième niveau, une source (140, 140a, 140b, 140c, 140d, 129) du premier signal audio (142, 142a, 142b) et du deuxième signal audio (144, 144a, 144b), à l'aide des informations relatives au premier endroit (129₁ à 129ₙ) et des informations relatives au deuxième endroit, spatialement dans la zone de surveillance (110).

3. Dispositif (100) selon la revendication 1 ou 2, dans lequel le premier signal audio (142, 142a, 142b) détecté par le premier capteur acoustique (122) est une superposition d'au moins deux événements sonores (140, 140a, 140b, 140c, 140d); et
dans lequel le premier processeur (124) est conçu pour appliquer un algorithme de séparation de source au premier signal audio (142, 142a, 142b) pour classifier les au moins deux événements sonores (140, 140a, 140b, 140c, 140d) ou pour obtenir un premier signal de source et un deuxième signal de source qui représentent les au moins deux événements sonores (140, 140a, 140b, 140c, 140d) pour classifier le premier signal de source et le deuxième signal de source.

4. Dispositif (100) selon l'une des revendications 1 à 3, dans lequel le premier résultat de classification (128₁ à 128ₙ) et le deuxième résultat de classification (138₁, 138₂) sont conçus pour indiquer les appareils utilisés dans la zone de surveillance (110), les activités dans la zone de surveillance (110), les volumes sonores dans la zone de surveillance (110), les phases d'un processus dans la zone de surveillance (110) ou une coïncidence d'au moins une partie du premier signal audio (142, 142a, 142b) ou du deuxième signal audio (144, 144a, 144b) avec un résultat de classification prédéterminé.

5. Dispositif (100) selon l'une des revendications 1 à 4, dans lequel le premier moyen de transmission (126) est conçu pour transmettre le premier résultat de classification (128₁ à 128ₙ) avec des premières informations locales (129, 129₁ à 129ₙ) ou temporelles (127, 127₁ à 127ₙ) au moyen d'évaluation central (150); et
dans lequel le moyen d'évaluation central (150) est conçu pour générer le premier résultat de classification (128₁ à 128ₙ) en rapport avec les premières informations locales (129, 129₁ à 129ₙ) et temporelles (127, 127₁ à 127ₙ) comme sortie de surveillance (152) pour la zone de surveillance (110),
dans lequel le moyen d'évaluation central (150) présente les caractéristiques suivantes:
une mémoire (154) destinée à mémoriser un plan de déroulement de processus prédéterminé qui présente une séquence d'activités dans la zone de surveillance (110),
un processeur (156) destiné à ordonner le premier résultat de classification (128₁ à 128ₙ) et le deuxième résultat de classification (138₁, 138₂) selon un ordre (152) qui est défini par l'intermédiaire d'informations spatiales 129, 129₁ à 129ₙ, 139₁, 139₂) ou temporelles (127, 127₁ à 127ₙ) sur le premier système de capteur (120) ou le deuxième système de capteur (130), où le premier résultat de classification (128₁ à 128ₙ) et le deuxième résultat de classification (138₁, 138₂) indiquent les activités dans le zone surveillée (110);
pour comparer le plan de déroulement de processus prédéterminé avec le premier et le deuxième résultat de classification ordonnés 138₁, 138₂); et
pour générer une sortie de surveillance (152) en fonction d'un résultat de la comparaison.

6. Dispositif (100) selon la revendication 5, dans lequel la sortie de surveillance (152) indique une différence entre le plan de déroulement prédéterminé et le premier et le deuxième résultat de classification ordonnés (128₁ à 128ₙ, 138₁, 138₂).

7. Dispositif (100) selon l'une des revendications 1 à 6, dans lequel le premier système de capteur (120) ou le deuxième système de capteur (130) est conçu pour détecter par le premier capteur acoustique (122) en continu un premier signal audio (142, 142a, 142b) pour classifier le premier signal audio (142, 142a, 142b) dans le premier processeur (124) dans un premier laps de temps maximum, où le premier laps de temps maximum est inférieur à cinq secondes, et dans lequel le premier moyen de transmission (126) est conçu pour transmettre le premier résultat de classification (128₁ à 128ₙ) au moyen d'évaluation central (150) dans un deuxième laps de temps maximum, où le deuxième laps de temps maximum est inférieur à cinq secondes.

8. Dispositif (100) selon l'une des revendications 1 à 7, dans lequel le premier système de capteur (120) est conçu pour obtenir le premier résultat de classification (128₁ à 128ₙ) à un premier moment et à un deuxième moment et pour le transmettre au moyen d'évaluation central (150) au moyen du premier processeur (124) et au moyen du premier moyen de transmission (126); et
dans lequel le moyen d'évaluation central (150) est conçu pour ordonner et indiquer le premier résultat de classification (128₁ à 128ₙ) du premier moment (127₁ à 127ₙ) et le premier résultat de classification (128₁ à 128ₙ) du deuxième moment (127₁ à 127ₙ) en fonction du premier moment (127₁ à 127ₙ) ou du deuxième moment (127₁ à 127ₙ).

9. Dispositif (100) selon l'une quelconque des revendications 1 à 8, dans lequel le premier capteur acoustique (122) est conçu pour détecter le premier signal audio (142, 142a, 142b);
dans lequel le premier capteur acoustique (122) est conçu pour mesurer un premier niveau du premier signal audio (142, 142a 142b); et
dans lequel le premier capteur acoustique (122) est conçu pour ne déplacer le premier processeur (124) ou le premier moyen de transmission (126) qu'en cas de dépassement d'une valeur limite inférieure pour le premier niveau d'un mode de veille à un mode de fonctionnement, et
dans lequel le premier processeur (124) est conçu pour ne déterminer le premier résultat de classification (128₁ à 128ₙ) ou le deuxième résultat de classification (138₁, 138₂) qu'en mode de fonctionnement, ou
dans lequel le premier moyen de transmission (126) est conçu pour n'effectuer une transmission qu'en mode de fonctionnement, et
dans lequel le premier moyen de transmission (126) ou le premier processeur (124) sont conçus pour consommer moins d'énergie en mode de veille qu'en mode de fonctionnement.

10. Dispositif (100) selon l'une des revendications 1 à 9, dans lequel le premier capteur acoustique (122) est conçu pour détecter le premier signal audio (142, 142a, 142b);
dans lequel le premier capteur acoustique (122) est conçu pour mesurer un premier niveau du premier signal audio (142, 142a, 142b); et
dans lequel le premier capteur acoustique (122) est conçu pour placer le premier processeur (124) ou le premier moyen de transmission (126) de sorte que le premier résultat de classification (128₁ à 128ₙ) soit déterminé par le premier processeur (124) et transmis au moyen d'évaluation central (150) au moyen du premier moyen de transmission (126) lorsque le premier niveau est supérieur à une valeur limite inférieure et que, lorsque le premier niveau est inférieur ou égal à la valeur limite inférieure, aucun premier résultat de classification (128₁ à 128ₙ) ne soit déterminé par le premier processeur (124) et transmis au moyen d'évaluation central (150) au moyen du premier moyen de transmission (126).

11. Dispositif (100) selon l'une des revendications 1 à 10, dans lequel le premier moyen de transmission (126) est conçu pour transmettre au moyen d'évaluation central (150) une identification du premier système de capteur (120) avec le premier résultat de classification (128₁ à 128ₙ);
dans lequel le deuxième moyen de transmission (136) est conçu pour transmettre au moyen d'évaluation central (150) une identification du deuxième système de capteur (130) avec le deuxième résultat de classification (138₁, 138₂);
dans lequel le moyen d'évaluation central (150) présente une mémoire (154), dans lequel la mémoire présente une association de l'identification du premier système de capteur (120) avec le premier endroit (129₁ à 129ₙ) et de l'identification du deuxième système de capteur (130) avec le deuxième endroit (139₁, 139₂);
dans lequel le moyen d'évaluation central (150) est conçu pour déterminer, sur base de l'identification du premier système de capteur (120), le premier endroit (129₁ à 129ₙ) à partir de la mémoire et pour déterminer, sur base de l'identification du deuxième système de capteur (130), le deuxième endroit (139₁, 139₂) à partir de la mémoire; et
dans lequel le moyen d'évaluation central (150) est conçu pour localiser spatialement, sur base du premier endroit (129₁ à 129ₙ), du deuxième endroit (139₁, 139₂), du premier résultat de classification (128₁ à 128ₙ) ou du deuxième résultat de classification (138₁, 138₂), une première zone de sources (I, II, III, IV, V, VI) du premier signal audio (142, 142a, 142b) et une deuxième zone de sources (I, II, III, IV, V, VI) du deuxième signal audio (144, 144a, 144b) dans la zone de surveillance (110).

12. Dispositif (100) selon l'une des revendications 1 à 11, dans lequel le premier moyen de transmission (126) est conçu pour ne transmettre que le premier résultat de classification (128₁ à 128ₙ) ou un premier signal audio traité (142, 142a, 142b) au moyen d'évaluation central (150); et
dans lequel le deuxième moyen de transmission (136) est conçu pour ne transmettre que le deuxième résultat de classification (138₁, 138₂) ou un deuxième signal audio traité (144, 144a, 144b) au moyen d'évaluation central (150).

13. Dispositif (100) selon l'une des revendications 1 à 12, dans lequel le premier résultat de classification prédéterminé et le deuxième résultat de classification prédéterminé sont un résultat de classification (128) pour un véhicule;
dans lequel la zone de surveillance (110) est une route, un réseau routier ou un réseau ferroviaire;
dans lequel le premier système de capteur (120) ou le deuxième système de capteur (130) peut être placé le long de routes ou le long de rails,
dans lequel le moyen d'évaluation central (150) est conçu pour fournir une utilisation de la zone de surveillance (110) par endroit (129, 129₁ à 129ₙ, 139₁, 139₂) ou par groupe d'endroits (129, 129₁ à 129ₙ, 139₁, 139₂).

14. Procédé (200) pour la surveillance acoustique d'une zone de surveillance (110), aux étapes suivantes consistant à:
placer (210) un premier système de capteur (120) avec un premier capteur acoustique (122), un premier processeur (124) et un premier moyen de transmission (126) à un premier endroit (129i à 129ₙ) de la zone de surveillance (110);
placer (220) un deuxième système de capteur (130) avec un deuxième capteur acoustique (132), un deuxième processeur (134) et un deuxième moyen de transmission (136) à un deuxième endroit de la zone de surveillance (110) qui diffère du premier endroit (129₁ à 129ₙ),
classifier (230) par le premier processeur (124) un premier signal audio (142, 142a, 142b) détecté par le premier capteur acoustique (122) pour obtenir un premier résultat de classification (128i à 128ₙ);
classifier (240) par le deuxième processeur (134) un deuxième signal audio (144, 144a, 144b) détecté par le deuxième capteur acoustique (132) pour obtenir un deuxième résultat de classification (138₁, 138₂);
transmettre (250) le premier résultat de classification (128₁ à 128ₙ) à un moyen d'évaluation central (150) par le premier moyen de transmission (126);
transmettre (260) le deuxième résultat de classification (138₁, 138₂) au moyen d'évaluation central (150) par le deuxième moyen de transmission (136);
recevoir (270) le premier résultat de classification (128₁ à 128ₙ) et le deuxième résultat de classification (138₁, 138₂) par le moyen d'évaluation central (150); et
générer (280) une sortie de surveillance (152) pour la zone de surveillance (110) en fonction du premier résultat de classification (128₁ à 128ₙ) et du deuxième résultat de classification (138₁, 138₂) par le moyen d'évaluation central (150),
**caractérisé par le fait que**
un premier signal n'est transmis au moyen d'évaluation central (150) que lorsque le premier résultat de classification (128₁ à 128ₙ) coïncide avec un premier résultat de classification prédéterminé;
un deuxième signal n'est transmis au moyen d'évaluation central (150) que lorsque le deuxième résultat de classification (138₁, 138₂) coïncide avec un deuxième résultat de classification prédéterminé; et
il est compté, au moyen du premier signal, le nombre de fois par laps de temps que le premier système de capteur (120) a déterminé le premier résultat de classification prédéterminé ou a compté, au moyen du deuxième signal, le nombre de fois par laps de temps que le deuxième système de capteur (130) a déterminé le deuxième résultat de classement prédéterminé.

15. Programme d'ordinateur avec un code de programme pour la mise en oeuvre du procédé (200) selon la revendication 14 lorsque le programme est exécuté sur un ordinateur.
